(19)

Europäisches
Patentamt
European
Patent Office
Office européen
des brevets

(11) **EP 4 401 460 A1**

(12) **EUROPEAN PATENT APPLICATION**
published in accordance with Art. 153(4) EPC

(43) Date of publication:
**17.07.2024 Bulletin 2024/29**

(21) Application number: **22880129.6**

(22) Date of filing: **23.09.2022**

(51) International Patent Classification (IPC):
***H04W 24/08*** (2009.01)

(52) Cooperative Patent Classification (CPC):
**H04W 24/08; H04W 48/12; H04W 52/02;**
**H04W 76/28;** Y02D 30/70

(86) International application number:
**PCT/CN2022/121099**

(87) International publication number:
**WO 2023/061189 (20.04.2023 Gazette 2023/16)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **13.10.2021 CN 202111194278**

(71) Applicant: **Huawei Technologies Co., Ltd.**
**Shenzhen, Guangdong 518129 (CN)**

(72) Inventors:
• **CAO, Youlong**
**Shenzhen, Guangdong 518129 (CN)**

• **CHEN, Erkai**
**Shenzhen, Guangdong 518129 (CN)**
• **LIAO, Shuri**
**Shenzhen, Guangdong 518129 (CN)**
• **XU, Rui**
**Shenzhen, Guangdong 518129 (CN)**
• **DOU, Shengyue**
**Shenzhen, Guangdong 518129 (CN)**

(74) Representative: **Grünecker Patent- und**
**Rechtsanwälte**
**PartG mbB**
**Leopoldstraße 4**
**80802 München (DE)**

(54) **MONITORING METHOD AND APPARATUS FOR PDCCH**

(57) This application relates to the field of communication technologies, and discloses a physical downlink control channel PDCCH monitoring method and apparatus, to reduce power consumption of a terminal device. The method includes: receiving configuration information from a network device; and monitoring a PDCCH in M1 first time windows in N1 first time windows of a first time period based on the configuration information, where the first time period is a discontinuous reception DRX duration period, N1 is an integer greater than or equal to 2, and M1 is a positive integer less than N1.

FIG. 12

**Description**

**CROSS-REFERENCE TO RELATED APPLICATIONS**

This application claims priority to Chinese Patent Application No. 202111194278.3, filed with the China National Intellectual Property Administration on October 13, 2021 and entitled "PDCCH MONITORING METHOD AND APPARATUS", which is incorporated herein by reference in its entirety.

**TECHNICAL FIELD**

Embodiments of this application relate to the field of communication technologies, and in particular, to a physical downlink control channel (physical downlink control channel, PDCCH) monitoring method and apparatus.

**BACKGROUND**

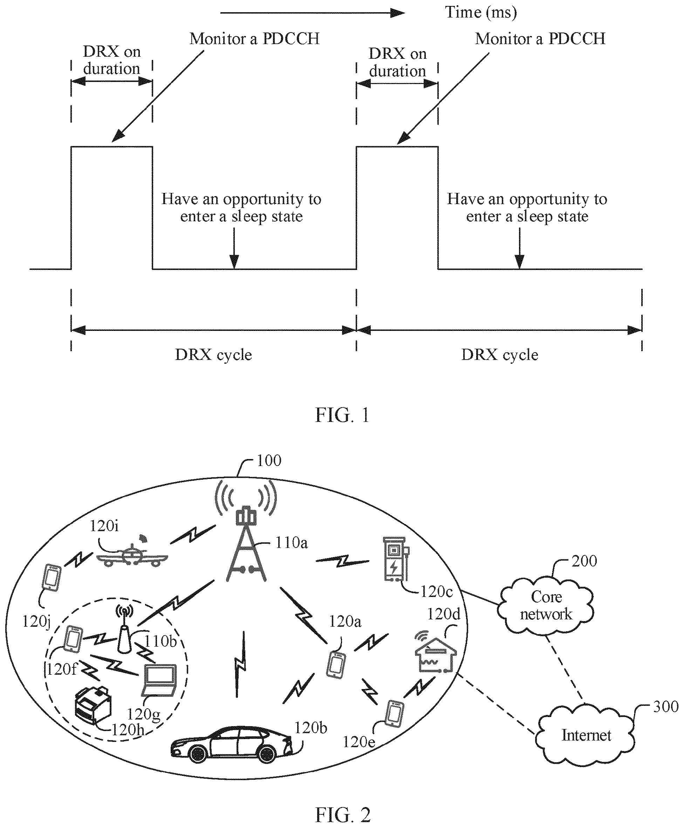

In a 5th generation (5th generation, 5G) mobile communication system, a discontinuous reception (discontinuous reception, DRX) technology is introduced for power saving (power saving). A basic mechanism of DRX is to configure a DRX cycle (cycle) for a terminal device. As shown in FIG. 1, in one DRX cycle, in a DRX on duration (on duration), a terminal device normally monitors a PDCCH; and in another time period, the terminal device has an opportunity (opportunity) to enter a sleep state, and does not receive a PDCCH, to reduce power consumption.

With continuous development of the 5G mobile communication system, some multimedia services having strong real-time performance and large data capacity requirements gradually penetrate into the 5G communication system, such as video transmission, cloud gaming (cloud gaming, CG), and extended reality (extended reality, XR). For the multimedia services, a jitter (jitter) occurs at an arrival moment of a service frame, that is, an arrival moment of the service frame is earlier or later than a specific ideal arrival moment. To adapt to the jitter of the service frame, in a DRX configuration method, duration of a DRX on duration needs to be set to cover a time range that may be reached by the entire service frame. Consequently, time for monitoring a PDCCH by the terminal device is excessively long, and power consumption is excessively high.

**SUMMARY**

Embodiments of this application provide a communication method and apparatus, to reduce power consumption of a terminal device.

According to a first aspect, an embodiment of this application provides a communication method. The method may be performed by a terminal device, or may be performed by a component (for example, a processor, a chip, or a chip system) of the terminal device, or may be implemented by a logical module or software that can implement all or some functions of the terminal device. The method includes: receiving configuration information from a network device; and monitoring a PDCCH in M1 first time windows in N1 first time windows of a first time period based on the configuration information, where the first time period is a DRX on duration, N1 is an integer greater than or equal to 2, and M1 is a positive integer less than N1.

According to the method, the DRX on duration is divided into a plurality of (two or more) first time windows, so that the terminal device monitors the PDCCH in some first time windows in the DRX on duration, and can enter sleep in a first time window, in the DRX on duration, in which the PDCCH does not need to be monitored. This reduces power consumption.

In a possible design, the configuration information includes time window bitmap information, and the time window bitmap information is used to configure the M1 first time windows. Optionally, the configuration information is further used to configure a value of N1 or duration of one of the N1 first time windows.

The foregoing design provides a flexible implementation in which the network device configures, for the terminal device, the M1 first time windows used to monitor the PDCCH, and therefore helps meet different communication requirements.

In a possible design, the configuration information includes time window index information, and the time window index information is used to configure the M1 first time windows. Optionally, a first time window pattern corresponding to the M1 first time windows is one of a plurality of first time window patterns.

In the foregoing design, information element overheads of configuring, by the network device for the terminal device, the M1 first time windows used to monitor the PDCCH are reduced, so that wireless communication resources can be saved, and utilization of wireless communication resources can be improved.

In a possible design, the method further includes: sending DRX preference information to the network device, where the DRX preference information indicates a preference for power consumption and/or a preference for a delay.

The foregoing design helps the network device deliver the configuration information to the terminal device based on the DRX preference information of the terminal device, and therefore obtains a better experience level with as low power consumption as possible while meeting performance requirements of a user on power consumption and a service delay.

In an example, the DRX preference information may indicate the preference for power consumption, for example, a power consumption reduction proportion. In this case, the network device may deliver, to the terminal device based on a power consumption requirement, of the terminal device, that the power consumption reduction proportion (for example, 20%) is reduced when the first time period is totally used to monitor the PDCCH, the configuration information to configure the M1 first time windows used to monitor the PDCCH, so that the terminal device monitors the PDCCH in the M1 first time windows in the N1 first time windows of the first time period. This meets the power consumption requirement of the terminal device.

In another example, the DRX preference information may indicate the preference for the delay, for example, an average schedule delay. In this case, the network device may deliver, to the terminal device based on a requirement, of the terminal device, that a delay not longer than the average schedule delay is added on a basis of a schedule delay when the first time period is totally used to monitor the PDCCH, the configuration information to configure the M1 first time windows used to monitor the PDCCH, so that the terminal device monitors the PDCCH in the M1 first time windows in the N1 first time windows of the first time period. This reduces power consumption of the terminal device, and meets the service delay requirement of the terminal device.

In still another example, the DRX preference information may alternatively indicate both the preference for power consumption and the preference for the delay, for example, a power consumption reduction proportion and an average schedule delay. In this case, the network device may deliver, to the terminal device based on a power consumption requirement, of the terminal device, that the power consumption reduction proportion is reduced when the first time period is totally used to monitor the PDCCH and a requirement that a delay not longer than the average schedule delay is added on a basis of a schedule delay when the first time period is totally used to monitor the PDCCH, the configuration information to configure the M1 first time windows used to monitor the PDCCH, so that the terminal device monitors the PDCCH in the M1 first time windows in the N1 first time windows of the first time period. This reduces power consumption of the terminal device, and meets the service delay requirement of the terminal device.

In a possible design, the method further includes: monitoring the PDCCH in M2 second time windows in N2 second time windows of a second time period based on the configuration information, where the first time period is a DRX on duration of a long DRX cycle, the second time period is a DRX on duration of a short DRX cycle, N2 is an integer greater than or equal to 2, and M2 is a positive integer less than N2.

The foregoing design can be used to resolve a problem that different types of service frames (for example, video frames) have different delay requirements. The M1 first time windows and the M2 second time windows that are used to monitor the PDCCH are configured in the DRX on duration of the long DRX cycle and the DRX on duration of the short DRX cycle respectively. This can better reduce power consumption of the terminal device while meeting the delay requirements of the different types of service frames.

In a possible design, the method further includes: obtaining M2 second time windows in N2 second time windows of a second time period based on the configuration information, where the first time period is a DRX on duration of a long DRX cycle, the second time period is a DRX on duration of a short DRX cycle, N2 is an integer greater than or equal to 2, and M2 is a positive integer less than N2; and when the first time period and the second time period do not overlap in time, monitoring the PDCCH in the M2 second time windows; and the monitoring a PDCCH in M1 first time windows in N1 first time windows of a first time period includes: when the first time period and the second time period overlap in time, monitoring the PDCCH in the M1 first time windows.

The foregoing design can be used to resolve a problem that different types of service frames (for example, video frames) have different delay requirements. The M1 first time windows and the M2 second time windows that are used to monitor the PDCCH are configured in the DRX on duration of the long DRX cycle and the DRX on duration of the short DRX cycle respectively. This can better reduce power consumption of the terminal device while meeting the delay requirements of the different types of service frames, and further provide a solution for a conflict between the DRX on duration of the long DRX cycle and the DRX on duration of the short DRX cycle.

According to a second aspect, an embodiment of this application provides a communication method. The method may be performed by a terminal device, or may be performed by a component (for example, a processor, a chip, or a chip system) of the terminal device, or may be implemented by a logical module or software that can implement all or some functions of the terminal device. The method includes: receiving configuration information from a network device; and monitoring a PDCCH in M1 first time windows in N1 first time windows of a first time period based on the configuration information, where duration of the first time period is a DRX cycle, N1 is an integer greater than or equal to 3, and M1 is an integer less than N1 and greater than or equal to 2.

According to the foregoing method, the DRX cycle is divided into a plurality of (two or more) first time windows, so that the terminal device monitors the PDCCH in some first time windows in the DRX cycle, and can enter sleep in a first time window, in the DRX cycle, in which the PDCCH does not need to be monitored. This reduces power consumption.

In a possible design, there are at least two first time windows that are inconsecutive in time in the M1 first time windows.

In the foregoing design, there are the at least two first time windows that are inconsecutive in the time in the M1 first time windows used to monitor the PDCCH, so that the first time windows used to monitor the PDCCH are deployed in a decentralized manner in the DRX cycle. This reduces a service delay as much as possible.

In a possible design, the configuration information includes time window bitmap information, and the time window bitmap information is used to configure the M1 first time windows. Optionally, the configuration information is further used to configure a value of N1 or duration of one of the N1 first time windows.

The foregoing design provides a flexible implementation in which the network device configures, for the terminal device, the M1 first time windows used to monitor the PDCCH, and therefore helps meet different communication requirements.

In a possible design, the configuration information includes time window index information, and the time window index information is used to configure the M1 first time windows. Optionally, a first time window pattern corresponding to the M1 first time windows is one of a plurality of first time window patterns.

In the foregoing design, information element overheads of configuring, by the network device for the terminal device, the M1 first time windows used to monitor the PDCCH are reduced, so that wireless communication resources can be saved, and utilization of wireless communication resources can be improved.

In a possible design, the method further includes: sending DRX preference information to the network device, where the DRX preference information indicates a preference for power consumption and/or a preference for a delay.

The foregoing design helps the network device deliver the configuration information to the terminal device based on the DRX preference information of the terminal device, and therefore obtains a better experience level with as low power consumption as possible while meeting performance requirements of a user on power consumption and a service delay.

In an example, the DRX preference information may indicate the preference for power consumption, for example, a power consumption reduction proportion. In this case, the network device may deliver, to the terminal device based on a power consumption requirement, of the terminal device, that the power consumption reduction proportion (for example, 20%) is reduced when the first time period is totally used to monitor the PDCCH, the configuration information to configure the M1 first time windows used to monitor the PDCCH, so that the terminal device monitors the PDCCH in the M1 first time windows in the N1 first time windows of the first time period. This meets the power consumption requirement of the terminal device.

In another example, the DRX preference information may indicate the preference for the delay, for example, an average schedule delay. In this case, the network device may deliver, to the terminal device based on a requirement, of the terminal device, that a delay not longer than the average schedule delay is added on a basis of a schedule delay when the first time period is totally used to monitor the PDCCH, the configuration information to configure the M1 first time windows used to monitor the PDCCH, so that the terminal device monitors the PDCCH in the M1 first time windows in the N1 first time windows of the first time period. This reduces power consumption of the terminal device, and meets the service delay requirement of the terminal device.

In still another example, the DRX preference information may alternatively indicate both the preference for power consumption and the preference for the delay, for example, a power consumption reduction proportion and an average schedule delay. In this case, the network device may deliver, to the terminal device based on a power consumption requirement, of the terminal device, that the power consumption reduction proportion is reduced when the first time period is totally used to monitor the PDCCH and a requirement that a delay not longer than the average schedule delay is added on a basis of a schedule delay when the first time period is totally used to monitor the PDCCH, the configuration information to configure the M1 first time windows used to monitor the PDCCH, so that the terminal device monitors the PDCCH in the M1 first time windows in the N1 first time windows of the first time period. This reduces power consumption of the terminal device, and meets the service delay requirement of the terminal device.

According to a third aspect, an embodiment of this application provides a communication method. The method may be performed by a network device, or may be performed by a component (for example, a processor, a chip, or a chip system) of the network device, or may be implemented by a logical module or software that can implement all or some functions of the network device. The method includes: generating configuration information, where the configuration information is used to configure M1 first time windows in N1 first time windows of a first time period, the M1 first time windows are used to monitor a PDCCH, the first time period is a DRX on duration, N1 is an integer greater than or equal to 2, and M1 is a positive integer less than N1; and sending the configuration information to a terminal device.

In a possible design, the configuration information includes time window bitmap information, and the time window bitmap information is used to configure the M1 first time windows. Optionally, the configuration information is further used to configure a value of N1 or duration of one of the N1 first time windows.

In a possible design, the configuration information includes time window index information, and the time window index information is used to configure the M1 first time windows. Optionally, a first time window pattern corresponding to the M1 first time windows is one of a plurality of first time window patterns.

In a possible design, the method further includes: receiving DRX preference information from the terminal device, where the DRX preference information indicates a preference for power consumption and/or a preference for a delay.

In an example, the DRX preference information may indicate the preference for power consumption, for example, a power consumption reduction proportion. In this case, the network device may deliver, to the terminal device based on a power consumption requirement, of the terminal device, that the power consumption reduction proportion (for example, 20%) is reduced when the first time period is totally used to monitor the PDCCH, the configuration information to configure the M1 first time windows used to monitor the PDCCH, so that the terminal device monitors the PDCCH in the M1 first time windows in the N1 first time windows of the first time period. This meets the power consumption requirement of the terminal device.

In another example, the DRX preference information may indicate the preference for the delay, for example, an average schedule delay. In this case, the network device may deliver, to the terminal device based on a requirement, of the terminal device, that a delay not longer than the average schedule delay is added on a basis of a schedule delay when the first time period is totally used to monitor the PDCCH, the configuration information to configure the M1 first time windows used to monitor the PDCCH, so that the terminal device monitors the PDCCH in the M1 first time windows in the N1 first time windows of the first time period. This reduces power consumption of the terminal device, and meets the service delay requirement of the terminal device.

In still another example, the DRX preference information may alternatively indicate both the preference for power consumption and the preference for the delay, for example, a power consumption reduction proportion and an average schedule delay. In this case, the network device may deliver, to the terminal device based on a power consumption requirement, of the terminal device, that the power consumption reduction proportion is reduced when the first time period is totally used to monitor the PDCCH and a requirement that a delay not longer than the average schedule delay is added on a basis of a schedule delay when the first time period is totally used to monitor the PDCCH, the configuration information to configure the M1 first time windows used to monitor the PDCCH, so that the terminal device monitors the PDCCH in the M1 first time windows in the N1 first time windows of the first time period. This reduces power consumption of the terminal device, and meets the service delay requirement of the terminal device.

In a possible design, the configuration information is further used to configure M2 second time windows in N2 second time windows of a second time period, the M2 second time windows are used to monitor the PDCCH, the first time period is a DRX on duration of a long DRX cycle, the second time period is a DRX on duration of a short DRX cycle, N2 is an integer greater than or equal to 2, and M2 is a positive integer less than N2.

According to a fourth aspect, an embodiment of this application provides a communication method. The method may be performed by a network device, or may be performed by a component (for example, a processor, a chip, or a chip system) of the network device, or may be implemented by a logical module or software that can implement all or some functions of the network device. The method includes: generating configuration information, where the configuration information is used to configure M1 first time windows in N1 first time windows of a first time period, the M1 first time windows are used to monitor a PDCCH, duration of the first time period is a DRX cycle, N1 is an integer greater than or equal to 3, and M1 is an integer less than N1 and greater than or equal to 2; and sending the configuration information to a terminal device.

In a possible design, there are at least two first time windows that are inconsecutive in time in the M1 first time windows.

In a possible design, the configuration information includes time window bitmap information, and the time window bitmap information is used to configure the M1 first time windows. Optionally, the configuration information is further used to configure a value of N1 or duration of one of the N1 first time windows.

In a possible design, the configuration information includes time window index information, and the time window index information is used to configure the M1 first time windows. Optionally, a first time window pattern corresponding to the M1 first time windows is one of a plurality of first time window patterns.

In a possible design, the method further includes: receiving DRX preference information from the terminal device, where the DRX preference information indicates a preference for power consumption and/or a preference for a delay.

In an example, the DRX preference information may indicate the preference for power consumption, for example, a power consumption reduction proportion. In this case, the network device may deliver, to the terminal device based on a power consumption requirement, of the terminal device, that the power consumption reduction proportion (for example, 20%) is reduced when the first time period is totally used to monitor the PDCCH, the configuration information to configure the M1 first time windows used to monitor the PDCCH, so that the terminal device monitors the PDCCH in the M1 first time windows in the N1 first time windows of the first time period. This meets the power consumption requirement of the terminal device.

In another example, the DRX preference information may indicate the preference for the delay, for example, an average schedule delay. In this case, the network device may deliver, to the terminal device based on a requirement, of the terminal device, that a delay not longer than the average schedule delay is added on a basis of a schedule delay when the first time period is totally used to monitor the PDCCH, the configuration information to configure the M1 first time windows used to monitor the PDCCH, so that the terminal device monitors the PDCCH in the M1 first time windows in the N1 first time windows of the first time period. This reduces power consumption of the terminal device, and meets the service delay requirement of the terminal device.

In still another example, the DRX preference information may alternatively indicate both the preference for power consumption and the preference for the delay, for example, a power consumption reduction proportion and an average schedule delay. In this case, the network device may deliver, to the terminal device based on a power consumption requirement, of the terminal device, that the power consumption reduction proportion is reduced when the first time period is totally used to monitor the PDCCH and a requirement that a delay not longer than the average schedule delay is added on a basis of a schedule delay when the first time period is totally used to monitor the PDCCH, the configuration information to configure the M1 first time windows used to monitor the PDCCH, so that the terminal device monitors the PDCCH in the M1 first time windows in the N1 first time windows of the first time period. This reduces power consumption of the terminal device, and meets the service delay requirement of the terminal device.

According to a fifth aspect, an embodiment of this application provides a communication apparatus. The apparatus has a function of implementing the method according to any one of the first aspect or the possible designs of the first aspect, or a function of implementing the method according to any one of the second aspect or the possible designs of the second aspect. The function of the apparatus may be implemented by hardware, or may be implemented by hardware executing corresponding software. The hardware or software includes one or more modules (or units) corresponding to the foregoing functions, for example, includes an interface unit and a processing unit.

In a possible design, the apparatus may be a chip or an integrated circuit.

In a possible design, the apparatus includes a memory and a processor. The memory is configured to store a program executed by the processor. When the program is executed by the processor, the apparatus may perform the method according to any one of the first aspect or the possible designs of the first aspect, or the method according to any one of the second aspect or the possible designs of the second aspect.

In a possible design, the apparatus may be a terminal device, or may be a component (for example, a processor, a chip, or a chip system) of the terminal device, or may be a logical module or software that can implement all or some functions of the terminal device.

According to a sixth aspect, an embodiment of this application provides a communication apparatus. The apparatus has a function of implementing the method according to any one of the third aspect or the possible designs of the third aspect, or a function of implementing the method according to any one of the fourth aspect or the possible designs of the fourth aspect. The function of the apparatus may be implemented by hardware, or may be implemented by hardware executing corresponding software. The hardware or software includes one or more modules (or units) corresponding to the foregoing functions, for example, includes an interface unit and a processing unit.

In a possible design, the apparatus may be a chip or an integrated circuit.

In a possible design, the apparatus includes a memory and a processor. The memory is configured to store a program executed by the processor. When the program is executed by the processor, the apparatus may perform the method according to any one of the third aspect or the possible designs of the third aspect, or the method according to any one of the fourth aspect or the possible designs of the fourth aspect.

In a possible design, the apparatus may be a network device, or may be a component (for example, a processor, a chip, or a chip system) of the network device, or may be a logical module or software that can implement all or some functions of the network device.

According to a seventh aspect, an embodiment of this application provides a communication system. The communication system includes a terminal device and a network device. The terminal device may perform the method according to any one of the first aspect or the possible designs of the first aspect, and the network device may perform the method according to any one of the third aspect or the possible designs of the third aspect. Alternatively, the terminal device may perform the method according to any one of the second aspect or the possible designs of the second aspect, and the network device may perform the method according to any one of the fourth aspect or the possible designs of the fourth aspect.

According to an eighth aspect, an embodiment of this application provides a computer-readable storage medium. The storage medium stores a computer program or instructions. When the computer program or instructions are executed, the method according to any one of the first aspect or the possible designs of the first aspect, or the method according to any one of the second aspect or the possible designs of the second aspect, or the method according to any one of the third aspect or the possible designs of the third aspect, or the method according to any one of the fourth aspect or the possible designs of the fourth aspect may be implemented.

According to a ninth aspect, an embodiment of this application further provides a computer program product, including a computer program or instructions. When the computer program or instructions are executed, the method according to any one of the first aspect or the possible designs of the first aspect, or the method according to any one of the second aspect or the possible designs of the second aspect, or the method according to any one of the third aspect or the possible designs of the third aspect, or the method according to any one of the fourth aspect or the possible designs of the fourth aspect may be implemented.

According to a tenth aspect, an embodiment of this application further provides a chip. The chip is coupled to a memory, and is configured to read and execute a program or instructions stored in the memory, to implement the method according to any one of the first aspect or the possible designs of the first aspect, or the method according to any one of the second aspect or the possible designs of the second aspect, or the method according to any one of the third aspect or the possible designs of the third aspect, or the method according to any one of the fourth aspect or the possible designs of the fourth aspect.

For technical effect that can be achieved in the third aspect to the tenth aspect, refer to the technical effect that can be achieved in the first aspect or the second aspect. Details are not described herein again.

**BRIEF DESCRIPTION OF DRAWINGS**

FIG. 1 is a diagram of a DRX cycle according to this application;
FIG. 2 is a diagram of an architecture of a communication system according to an embodiment of this application;
FIG. 3 is a diagram 1 of a scenario to which an embodiment of this application is applicable;
FIG. 4 is a diagram 2 of a scenario to which an embodiment of this application is applicable;
FIG. 5 is a diagram 3 of a scenario to which an embodiment of this application is applicable;
FIG. 6 is a diagram of service frame arrival according to an embodiment of this application;
FIG. 7 is a diagram 1 of a communication method according to an embodiment of this application;
FIG. 8 is a diagram of another DRX cycle according to an embodiment of this application;
FIG. 9 is a diagram 1 of a structure of a first time window according to an embodiment of this application;
FIG. 10 is a diagram of power consumption of switching of a deep sleep state/light sleep state according to an embodiment of this application;
FIG. 11 is a diagram of distribution of service frame arrival probabilities according to an embodiment of this application;
FIG. 12 is a diagram 2 of a communication method according to an embodiment of this application;
FIG. 13 is a diagram of a power consumption ratio and an average schedule delay according to an embodiment of this application;
FIG. 14 is a diagram of a long DRX cycle and a short DRX cycle according to an embodiment of this application;
FIG. 15 is a diagram of a time window for monitoring a PDCCH according to an embodiment of this application;
FIG. 16 is a diagram 3 of a communication method according to an embodiment of this application;
FIG. 17 is a diagram 2 of a structure of a first time window according to an embodiment of this application;
FIG. 18 is a diagram of a DRX activity period according to an embodiment of this application;
FIG. 19 is a diagram of a DRX command (command) media access control layer (media access control, MAC) control element (control element, CE) according to an embodiment of this application;
FIG. 20 is a diagram 1 of a communication apparatus according to an embodiment of this application; and
FIG. 21 is a diagram 2 of a communication apparatus according to an embodiment of this application.

**DESCRIPTION OF EMBODIMENTS**

FIG. 2 is a diagram of an architecture of a communication system to which an embodiment of this application is applicable. As shown in FIG. 2, the communication system includes a radio access network 100 and a core network 200. Optionally, the communication system may further include an internet 300. The radio access network 100 may include at least one network device, for example, 110a and 110b in FIG. 2, and may further include at least one terminal device, for example, 120a to 120j in FIG. 2. Here, 110a is a base station, 110b is a micro base station, 120a, 120e, 120f, and 120j are mobile phones, 120b is a vehicle, 120c is a fuel dispenser, 120d is a home access node (home access point, HAP) deployed indoors or outdoors, 120g is a notebook computer, 120h is a printer, and 120i is an uncrewed aerial vehicle. A same terminal device or network device may provide different functions in different application scenarios. For example, mobile phones in FIG. 2 include 120a, 120e, 120f, and 120j. The mobile phone 120a may access the base station 110a, connect to the vehicle 120b, directly communicate with the mobile phone 120e, and access the HAP. The mobile phone 120e may access the HAP and directly communicate with the mobile phone 120a. The mobile phone 120f may access the micro base station 110b, connect to the notebook computer 120g, and connect to the printer 120h. The mobile phone 120j may control the uncrewed aerial vehicle 120i.

The terminal device is connected to the network device, and the network device is connected to the core network. A core network device and the network device may be different physical devices independent of each other; functions of the core network device and logical functions of the network device may be integrated into a same physical device; or some functions of the core network device and some functions of the network device may be integrated into one physical device. Connection between terminal devices and connection between network devices may be performed in a wired or wireless manner. FIG. 2 is merely a diagram, and the communication system may further include other devices, for example, a wireless relay device and a wireless backhaul device not shown in FIG. 2.

The network device, also be referred to as a radio access network device, may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a base station in a 6th generation (6th generation, 6G) mobile communication system, a base station in a future mobile communication system, an access node in a Wi-Fi system, or the like; and may alternatively be a module or unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further completes functions of a service data adaptation protocol (service data adaptation protocol, SDAP). The DU completes functions of a radio link control layer and a media access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The network device may be a macro base station (for example, 110a in FIG. 2), or may be a micro base station or an indoor base station (for example, 110b in FIG. 2), or may be a relay node or a donor node. A specific technology and a specific device form that are used by the network device are not limited in embodiments of this application. It may be understood that all or some functions of the network device in this application may alternatively be implemented by using a software function running on hardware, or may be implemented by using an instantiated virtualization function on a platform (for example, a cloud platform).

The terminal device may also be referred to as a terminal, user equipment (user equipment, UE), a mobile station, a mobile terminal, or the like. The terminal device may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in embodiments of this application.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. An application scenario of the network device and the terminal device is not limited in embodiments of this application.

Roles of the network device and the terminal device may be relative. For example, the helicopter or the uncrewed aerial vehicle 120i in FIG. 2 may be configured as a mobile network device. For the terminal device 120j that accesses the radio access network 100 through 120i, the terminal device 120i is a network device. However, for the network device 1 10a, 120i is a terminal device, that is, 110a and 120i communicate with each other by using a radio air interface protocol. Certainly, 110a and 120i may alternatively communicate with each other by using an interface protocol between network devices. In this case, compared with 110a, 120i is also a network device. Therefore, both the network device and the terminal device may be collectively referred to as communication apparatuses. 110a and 110b in FIG. 2 each may be referred to as a communication apparatus having a function of a network device, and 120a to 120j in FIG. 2 each may be referred to as a communication apparatus having a function of a terminal device.

Communication may be performed between a network device and a terminal device, between network devices, or between terminal devices over a licensed spectrum, an unlicensed spectrum, or both a licensed spectrum and an unlicensed spectrum; or may be performed over a spectrum below 6 gigahertz (gigahertz, GHz), a spectrum above 6 GHz, or both a spectrum below 6 GHz and a spectrum above 6 GHz. A spectrum resource for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as a smart grid, industrial control, intelligent transportation, and a smart city. The function of the terminal device may alternatively be performed by a module (for example, a chip or a modem) in the terminal device, or may be performed by an apparatus including the function of the terminal device.

In this application, the network device sends a downlink signal or downlink information to the terminal device, where the downlink information is carried on a downlink channel. The terminal device sends an uplink signal or uplink information to the network device, where the uplink information is carried on an uplink channel. To communicate with the network device, the terminal device needs to establish a wireless connection to a cell controlled by the network device. The cell that establishes the wireless connection to the terminal device is referred to as a serving cell of the terminal device. When communicating with the serving cell, the terminal device is further interfered with by a signal from a neighboring cell.

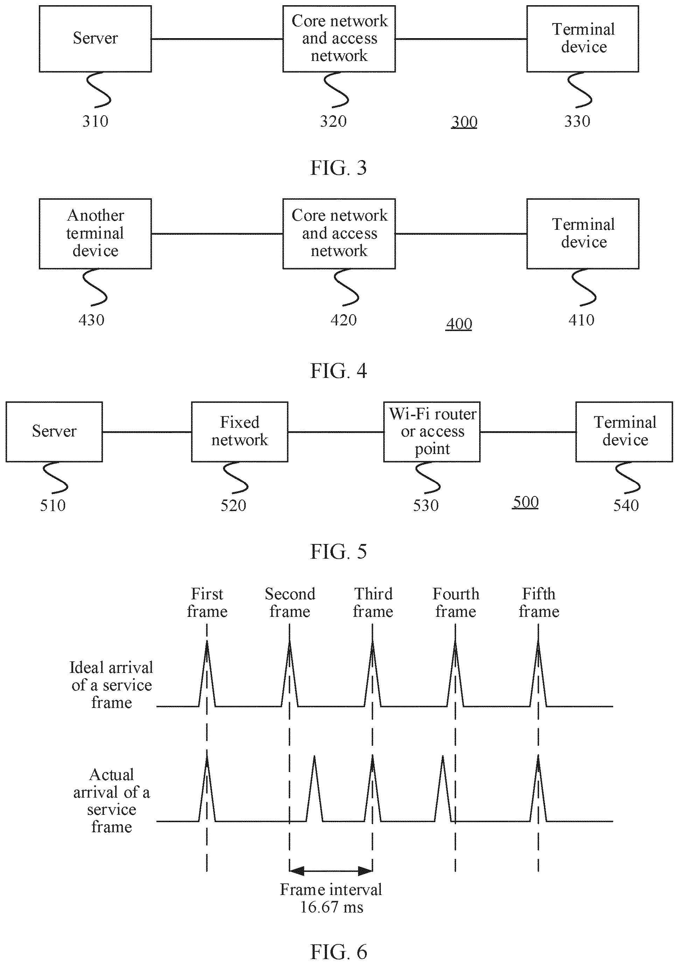

Embodiments provided in this application are applicable to a plurality of different scenarios. FIG. 3 to FIG. 5 are diagrams of several scenarios to which an embodiment of this application is applicable.

FIG. 3 is a diagram of a scenario to which an embodiment of this application is applicable. FIG. 3 shows a system 300, including a server 310, a core network and access network 320 (which may be referred to as a transport network 320 for short, for example, an LTE, 5G, or 6G network), and a terminal device 330. The server 310 may be configured to encode, decode, and render XR source data, the transport network 320 may be configured to perform XR data transmission, and the terminal device 330 provides diversified XR experience for a user by processing the XR data. It may be understood that another apparatus may alternatively be included between the transport network 320 and the terminal device 330, for example, another terminal device (like a mobile phone, a notebook computer, or a vehicle-mounted terminal device) and/or a network device (like a relay device, an integrated access backhaul (integrated access backhaul, IAB) device, a Wi-Fi router, or a Wi-Fi access point). The terminal device 330 obtains the XR data from the transport network 320 by using the another terminal device and/or the network device.

FIG. 4 is another diagram of a scenario to which an embodiment of this application is applicable. FIG. 4 shows a system 400, including a terminal device 410, a core network and access network 420 (which may be referred to as a transport network 420 for short, for example, an LTE, 5G, or 6G network), and another terminal device 430. The another terminal device 430 is a terminal device different from the terminal device 410. The another terminal device 430 may perform XR data transmission with the terminal device 410 by using the transport network 420. For example, the terminal device 410 is an interface between a tactile user and a manual system in a primary domain, and the other terminal device 430 is a remote control robot or remote operator in a controlled domain. The primary domain receives an audio/video feedback signal from the controlled domain. With the help of various commands and feedback signals, the primary domain and the controlled domain are connected through a bidirectional communication link on the transport network 420. This forms a global control ring.

FIG. 5 is a still another diagram of a scenario to which an embodiment of this application is applicable. FIG. 5 shows a system 500, including a server 510, a fixed network 520, a Wi-Fi router or a Wi-Fi access point 530 (which may be referred to as a Wi-Fi apparatus 530 for short), and a terminal device 540. The server 510 may be configured to: encode, decode, and render XR source data, and perform XR data transmission with the terminal device 540 by using the fixed network 520 and the Wi-Fi apparatus 530. For example, the fixed network 520 is an operator network, the Wi-Fi apparatus 530 is a Wi-Fi router, a Wi-Fi access point, or a set-top box, and the server 510 performs XR data transmission or projection with the terminal device 540 by using the operator network 520 and the Wi-Fi apparatus 530.

It may be understood that FIG. 3 to FIG. 5 show merely examples of the several scenarios to which embodiments of this application are applicable, and do not limit an applicable scenario of embodiments of this application.

As some multimedia services having strong real-time performance and large data capacity requirements gradually penetrate into a 5G communication system and a terminal device is designed to be more and more lightweight, a battery life of the terminal device becomes a focus of attention of a user. For example, for an XR service, a user increasingly expects to improve experience by using a head mounted terminal device like a head mounted display (head mounted display, HMD) or smart glasses (such as VR glasses and augmented reality (augmented reality, AR) glasses). However, the head mounted terminal device is limited by a size, has a low battery capacity, and is expected to be worn for a long time. Therefore, power consumption control of the head mounted terminal device becomes an important part in a process of using the head-mounted terminal device. For another example, for long-time cloud gaming or video transmission, a user also expects that a battery of a terminal device has a long battery life. Therefore, power consumption control of the terminal device is also an important part in a process of using the terminal device.

Currently, service frames of a media service usually arrive periodically based on a frame rate. However, due to factors such as coding processing of a server and transmission of a fixed network/core network, the service frames do not strictly arrive periodically when arriving at a network device. As shown in FIG. 6, for a video with a frame rate of 60 frames per second (frames per second, FPS), in an ideal case, a frame interval is 1/60s, that is, one service frame arrives at an interval of 16.67 ms. However, due to factors such as coding processing of a server and transmission of a fixed network/core network, and an unequal delay of each service frame arriving at a network device, the frame interval is no longer 16.67 ms, that is, a jitter occurs when a service frame arrives. For example, in FIG. 6, a second frame is delayed for 5 ms, that is, a jitter=5 ms, and a fourth frame advanced for 3 ms, that is, a jitter=-3 ms. For an XR service with 60 FPS, jitter values comply with truncated Gaussian distribution in which an average value is 0, a standard deviation is 2 ms, and a value range is [-4 ms, 4 ms]. To adapt to the jitters, a DRX on duration needs to be set to a time range that may be reached by the entire service frame, that is, a DRX cycle is set to 16.67 ms, and the DRX on duration is set to 8 ms, so that the time range [-4 ms, 4 ms] that may be reached by the entire service frame can be covered. In this case, a terminal device needs to monitor a PDCCH in almost half of time in the DRX cycle, resulting in excessively high power consumption. In addition, if the value range of the jitters is further increased to reach or exceed the DRX cycle, the DRX on duration needs to be set to be equal to the DRX cycle. In other words, the terminal device needs to always monitor the PDCCH in the DRX cycle, and power consumption is higher.

In this application, it is mainly considered, from a perspective of effectively responding to a service frame jitter, to further reduce power consumption of the terminal device while ensuring user experience. The following describes in detail embodiments of this application with reference to accompanying drawings.

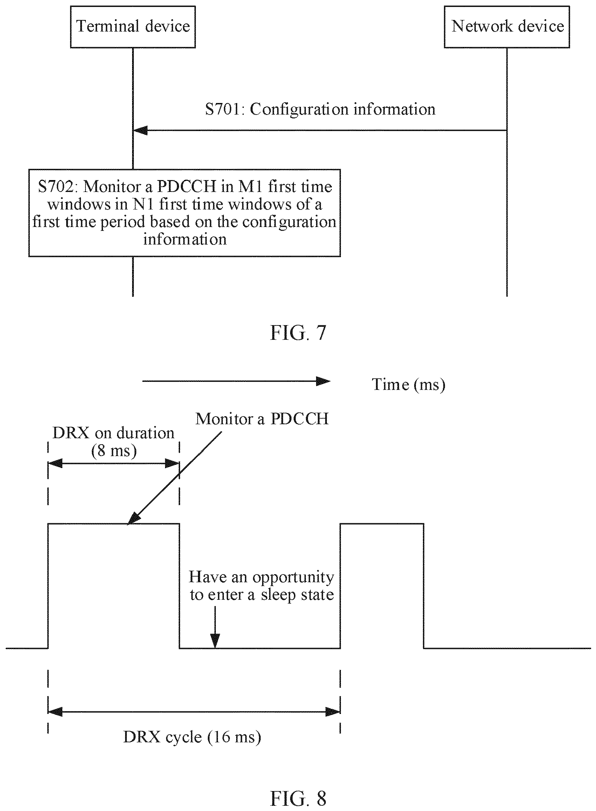

FIG. 7 is a diagram of a communication method according to an embodiment of this application. In FIG. 7, an example in which a network device and a terminal device are execution bodies for interaction is used to illustrate the method. However, execution bodies for interaction are not limited in this application. For example, the network device in FIG. 7 may be a chip, a chip system, or a processor that supports the network device in implementing the method, or may be a logical module or software that can implement all or some functions of the wireless network device. The terminal device in FIG. 7 may be a chip, a chip system, or a processor that supports the terminal device in implementing the method, or may be a logical module or software that can implement all or some functions of the terminal device. The method includes the following steps.

S701: The network device sends configuration information to the terminal device, and the terminal device receives the configuration information from the network device.

S702: The terminal device monitors a PDCCH in M1 first time windows in N1 first time windows of a first time period based on the configuration information.

In this embodiment of this application, the configuration information may be used to configure the M1 first time windows that are in the N1 first time windows of the first time period and that are used to monitor the PDCCH. Specifically, the first time period may be a period of continuous time in time domain. The first time period may be periodically distributed in time (which may also be referred to as time domain), or may be aperiodically distributed in time. For example, the first time period may be a DRX on duration (on duration), and is distributed based on a DRX cycle in time. In an example, as shown in FIG. 1, when a first time period is a DRX on duration, the first time period may be distributed based on a DRX cycle in time. Further, the first time period may be a DRX cycle, that is, one DRX cycle may be one first time period, duration of the first time period is equal to a DRX cycle, and the first time period is distributed based on a DRX cycle in time. Alternatively, the first time period may be a wake-up time period of a wake-up signal (wake-up signal, WUS), or the like. A WUS indicates the terminal device to monitor a PDCCH in a DRX on duration (which may also be referred to as a wake-up time period) of a next DRX cycle of a DRX cycle in which the WUS is received.

The configuration information may be sent by the network device to the terminal device through radio resource control (radio resource control, RRC) signaling, downlink control information (downlink control information, DCI), or the like.

In addition, it should be understood that the DRX on duration may alternatively be referred to as DRX duration, a DRX on period, a DRX on-time, or the like.

For example, the first time period is a DRX on duration. For an XR service with a frame rate of 60 FPS, jitter values of service frames comply with truncated Gaussian distribution in which an average value is 0, a standard deviation is 2 ms, and a value range is [-4 ms, 4 ms], a service frame interval of the XR service is 16.67 ms. For ease of description, 16.67 ms is rounded to 16 ms in this embodiment of this application. As shown in FIG. 8, a DRX cycle needs to be set to be 16 ms. In addition, to adapt to jitters, the first time period (the DRX on duration) needs to be set to a time range that may be reached by the entire service frame, that is, the DRX on duration needs to be set to 8 ms, so that the time range [-4 ms, 4 ms] that may be reached by the entire service frame can be covered. In this case, the terminal device needs to monitor the PDCCH in half of time in the first time period, resulting in excessively high power consumption.

To reduce power consumption of the terminal device, in this embodiment of this application, a feature of probability distribution of the jitters of the service frames in time can be used. The N1 first time windows of the first time period can be set based on the configuration information, the terminal device is configured to monitor the PDCCH in the M1 first time windows of the N1 first time windows, and the terminal device does not monitor the PDCCH in remaining (N1-M1) first time windows and enters a sleep state. This reduces power consumption. It should be understood that the time window may alternatively be referred to as a time raster (raster), a time sub-period, or the like. A name of the time window is not limited in this application.

In a possible implementation, duration of a first time window may be determined based on a slot length. For example, duration of a first time window may be equal to a slot length, or may be an integer multiple of the slot length.

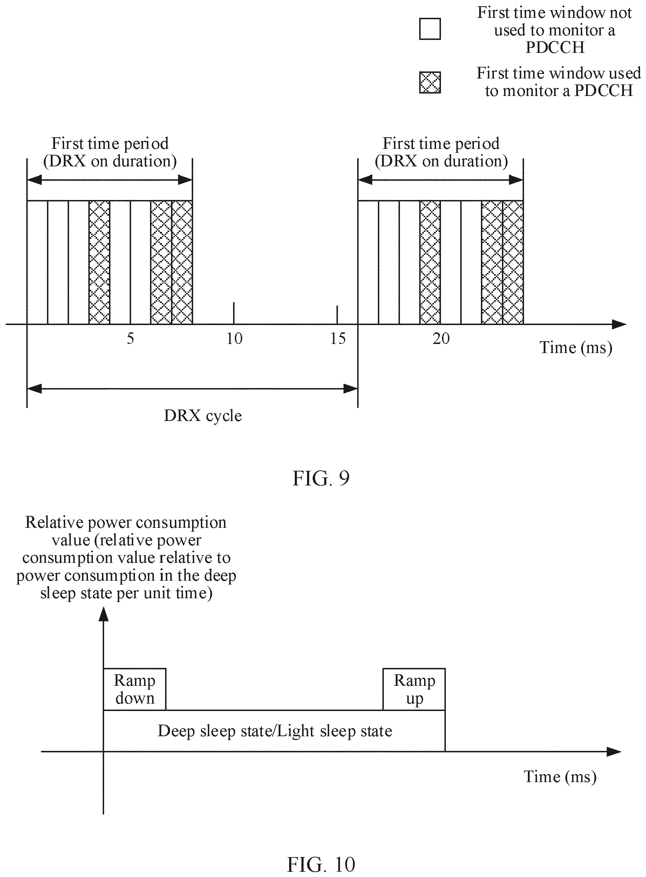

In an example, as shown in FIG. 9, for example, a slot length is 1 ms. The first time period whose duration is 8 ms in FIG. 8 may include eight first time windows, the eight first time windows do not overlap each other, and duration of each first time window is 1 ms. If the terminal device is configured, based on the configuration information, to monitor the PDCCH in three first time windows corresponding to duration between a 3rd ms and a 4th ms and duration from a 6th ms to an 8th ms in the first time period, the terminal device may enter the sleep state in five first time windows corresponding to duration from a 0th ms to a 3rd ms and duration from a 4th ms to a 6th ms in the first time period and do not monitor the PDCCH. This reduces power consumption.

Refer to Table 1. Table 1 shows an example of a relative power consumption value of a terminal device in a different state per unit time (for example, 1 ms). As shown in Table 1, for the terminal device in a sleep state, a quantity of hardware devices in an inactivity state in the terminal device in a deep sleep state is largest, and power consumption of the terminal device is smallest; a quantity of hardware devices in the inactivity state in the terminal device in a micro sleep state is smallest, and power consumption of the terminal device is largest; a quantity of hardware devices in the inactivity state in the terminal device in a light sleep state is smaller than the quantity of hardware devices in the inactivity state in the terminal device in the deep sleep state and is larger than the quantity of hardware devices in the inactivity state in the terminal device in the micro sleep state, and power consumption of the terminal device is larger than power consumption of the terminal device in the deep sleep state and is smaller than power consumption of the terminal device in the micro sleep state. If a power consumption value of the terminal device in the deep sleep state per unit time is represented as 1, as shown in Table 1, relative to power consumption of the terminal device in the deep sleep state per unit time, a relative power consumption value of the terminal device in the deep sleep state per unit time is 1, a relative power consumption value of the terminal device in the light sleep state per unit time is 20, a relative power consumption value of the terminal device in the micro sleep state per unit time is 45, a relative power consumption value of the terminal device per unit time is 100 when the terminal device monitors the PDCCH, and a relative power consumption value of the terminal device per unit time is 300 when both the PDCCH is monitored and a physical downlink shared channel (physical downlink shared channel, PDSCH) is received. It should be understood that a value of the relative power consumption value shown in Table 1 is merely an example.

**Table 1**

| Status | Monitor a PDCCH | Monitor a PDCCH+PDSCH | Micro sleep (micro sleep) state | Light sleep (light sleep) state | Deep sleep (deep sleep) state |
|---|---|---|---|---|---|
| Relative power consumption value | 100 | 300 | 45 | 20 | 1 |

In addition, switching time is required for the terminal device to switch from a monitoring state (for example, monitoring the PDCCH, or monitoring the PDCCH and receiving the PDSCH) to the sleep state, and then switch from the sleep state to the monitoring state, where switching time required for switching to the sleep state with lower power consumption is longer; and specific power is also consumed in a process of switching the terminal device from the monitoring state to the sleep state and then from the sleep state to the monitoring state. As shown in Table 2, an example of switching time from a monitoring state to a different sleep state and then from the different sleep state to the monitoring state and a corresponding relative power consumption value is provided. Switching time required for switching from the monitoring state to a deep sleep state and then from the deep sleep state to the monitoring state and a total relative power consumption value in a switching phase are 20 ms and 450 respectively. Switching time required for switching from the monitoring state to a light sleep state and then from the light sleep state to the monitoring state and a total relative power consumption value in a switching phase are 60 ms and 100 respectively. Switching time required for switching from the monitoring state to a micro sleep state and then from the micro sleep state to the monitoring state and a total relative power consumption value in a switching phase are 0 ms and 0 respectively.

**Table 2**

| Sleep state | Total relative power consumption value in a switching phase | Switching time |
|---|---|---|
| Deep sleep (Deep sleep) state | 450 | 20 ms |
| Light sleep (Light sleep) state | 100 | 6 ms |
| Micro sleep (Micro sleep) state | 0 | 0 ms |

FIG. 10 is a diagram of relative power consumption values (namely, relative power consumption values relative to power consumption in the deep sleep state per unit time) required for switching from the monitoring state to the deep sleep state/light sleep state and then from the deep sleep state/light sleep state to the monitoring state. Duration of the deep sleep state/light sleep state includes duration of switching from the monitoring state to the deep sleep state/light sleep state and then from the deep sleep state/light sleep state to the monitoring state. A square box marked as ramp down (ramp down) represents relative power consumption values of switching from the monitoring state (for example, monitoring a PDCCH, or monitoring a PDCCH and receiving a PDSCH) to the deep sleep state/light sleep state. A square box marked as ramp up (ramp up) represents relative power consumption values of switching from the deep sleep state/light sleep state to the monitoring state. A rectangle box marked as the deep sleep state/light sleep state represents relative power consumption values of the deep sleep state/light sleep state. Sums of the relative power consumption values, of switching from the monitoring state to the deep sleep state/light sleep state, represented by the square box marked as ramp down, and the relative power consumption values, of switching from the deep sleep state/light sleep state to the monitoring state, represented by the square box marked as ramp up are total relative power consumption values (for example, may be shown in Table 2) corresponding to the deep sleep state/light sleep state in the switching phase. It can be learned from FIG. 10 that the relative power consumption values caused by one switching of the terminal device from the monitoring state to the deep sleep state/light sleep state and then from the deep sleep state/light sleep state to the monitoring state are sums of the total relative power consumption values (for example, shown in Table 2) corresponding to the deep sleep state/light sleep state in the switching phase and relative power consumption values (for example, shown in Table 1) when the terminal device is in the deep sleep state/light sleep state.

For example, duration of the first time period is 8 ms, there are 16 first time windows of the first time period, duration of each first time window is 0.5 ms, and the 16 first time windows of the first time period are sequentially a 1st first time window, a 2nd first time window, ..., and a 16th first time window. If a pattern, of the 16 first time windows, corresponding to the M1 first time windows is configured to be [0, 0, 0, 1, 0, 1, 0, 1, 0, 1, 0, 1, 0, 0, 0, 1], that is, M1 is 6, the 4th first time window, the 6th first time window, the 8th first time window, the 10th first time window, the 12th first time window, and the 16th first time window of the 16 first time windows are used to monitor the PDCCH. Because a maximum of three consecutive first time windows are not used to monitor the PDCCH, maximum non-monitoring duration is 3*0.5=1.5 ms. If the terminal device is in the deep sleep state in a non-monitoring state (a state of not monitoring the PDCCH), it takes 20 ms for the terminal device to switch from the monitoring state to the deep sleep state and then from the deep sleep state to the monitoring state. Because the maximum non-monitoring duration is 1.5 ms, the terminal device cannot switch from the non-monitoring state to the deep sleep state. Further, if the terminal device is in the light sleep state in the non-monitoring state, it takes 6 ms for the terminal device to switch from the monitoring state to the light sleep state and then from the light sleep state to the monitoring state. Because the maximum non-monitoring duration is only 1.5 ms, the terminal device cannot switch from the non-monitoring state to the light sleep state. If the terminal device is in the micro sleep state in the non-monitoring state, it takes 0 ms for the terminal device to switch from the monitoring state to the micro sleep state and then from the micro sleep state to the monitoring state, that is, switching time is not required for the terminal device to switch from the monitoring state to the micro sleep state and then from the micro sleep state to the monitoring state. Therefore, the terminal device can switch from the non-monitoring state to the micro sleep state in the foregoing scenario. If the relative power consumption value (namely, a relative power consumption value relative to power consumption of the deep sleep state per unit time) when the terminal device is in the micro sleep state is 45, and the relative power consumption value of monitoring the PDCCH per unit time is 100, a total relative power consumption value of the first time period is 0.5*(45* 10+100*6)=525, where 10 represents the 10 first time windows that are not used to monitor the PDCCH, and 6 represents the six first time windows that are used to monitor the PDCCH. A reduced relative power consumption value is 275 compared with that in a total relative power consumption value 0.5*100*16=800 of monitoring the PDCCH within 8 ms. This reduces power consumption of the terminal device. It can be learned that, solutions in embodiments of this application can be used to reduce power consumption of the terminal device.

In addition, although the first time period includes the N1 first time windows, the terminal device monitors the PDCCH in the M1 first time windows in the N1 first time windows, and the terminal device may enter the sleep state in the remaining (N1-M1) first time windows. This can reduce power consumption of the terminal device. However, if a service frame arrives at the network device in one of the remaining (N1-M1) first time windows, the network device may schedule, only in a first time window in which the terminal device monitors the PDCCH and that is closest to the first time window, the terminal device to receive the service frame. This causes a scheduling delay for transmission of the service frame.

In the first time period, for example, a probability of arrival of a service frame in an $i^{th}$ first time window is $p_i$, a quantity of first time windows is N1, and a delay corresponding to each first time window is $d_i$. In this case, an average schedule delay caused in the first time period is:

$$Average\ Delay = \sum_{i=1}^{N1} p_i d_i$$

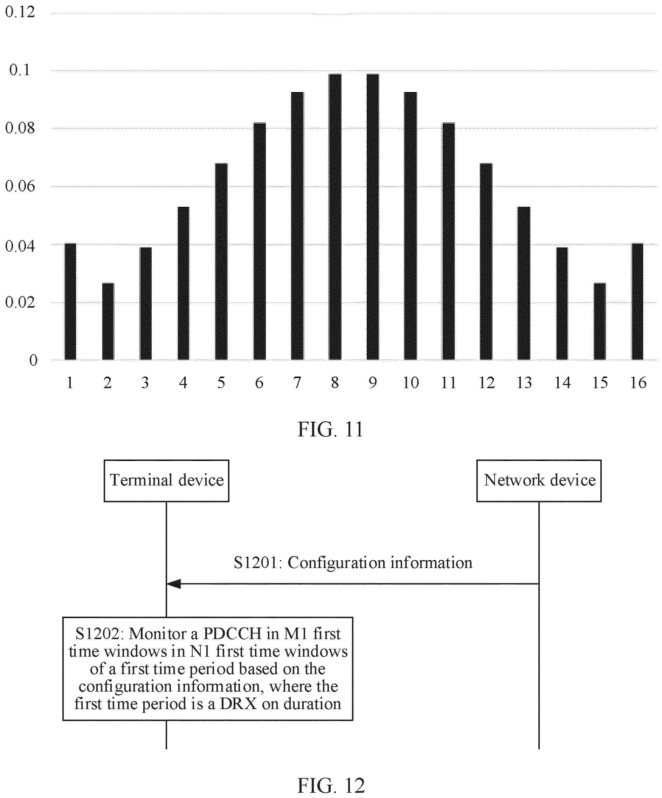

For example, the first time period is a DRX on duration, jitter values of service frames comply with truncated Gaussian distribution in which an average value is 0, a standard deviation is 2 ms, and a value range is [-4 ms, 4 ms], and duration of each first time window is 0.5 ms. Duration of the first time period is 8 ms, and there may be 16 first time windows of the first time period. As shown in FIG. 11, a horizontal axis in FIG. 11 represents a number of a first time window, that is, a specific first time window of the first time period; a vertical axis represents a probability that a service frame arrives in a first time window; and probabilities that the service frame arrives in a 1st first time window to a 16th first time window are respectively $[p_1, ..., p_{16}]$=[0.0401, 0.0267, 0.0388, 0.0531, 0.0679, 0.0819, 0.0928, 0.0987, 0.0987, 0.0928, 0.0819, 0.0679, 0.0531, 0.0388, 0.0267, 0.0401]. If a pattern, of the 16 first time windows, corresponding to the M1 first time windows is set to [0, 0, 0, 1, 0, 1, 0, 1, 0, 1, 0, 1, 0, 0, 0, 1], that is, the terminal device monitors the PDCCH in a 4th first time window, a 6th first time window, an 8th first time window, a 10th first time window, a 12th first time window, and a 16th first time window of the 16 first time windows, a schedule delay in each of the 16 first time windows is $[d_1, ..., d_{16}]$=[3, 2, 1, 0, 1, 0, 1, 0, 1, 0, 1, 0, 3, 2, 1, 0], where 3, 2, 1, and 0 in the scheduling delays indicate duration of three first time windows, duration of two first time windows, duration of one first time window, and duration of zero first time window respectively; and duration of one first time window is 0.5 ms. Therefore, the average schedule delay is equal to duration of *Average Delay* = 0.8174 first time windows, and the duration of one first time window is 0.5 ms, that is, the average schedule delay is 0.8174*0.5=0.4087 ms.

Therefore, the network device can not only configure, for the terminal device from a perspective of power consumption, the M1 first time windows that are in the N1 first time windows of the first time period and that are used to monitor the PDCCH, but also configure, for the terminal device from a perspective of factors such as the schedule delay or comprehensive consideration of factors such as the schedule delay and power consumption, the M1 first time windows that are in the N1 first time windows of the first time period and that are used to monitor the PDCCH. The following provides description with reference to a specific scenario.

Scenario 1: A first time period is a discontinuous reception DRX on duration.

FIG. 12 is a diagram of another communication method according to an embodiment of this application. In FIG. 12, an example in which a network device and a terminal device are execution bodies for interaction is used to illustrate the method. However, execution bodies for interaction are not limited in this application. For example, the network device in FIG. 12 may be a chip, a chip system, or a processor that supports the network device in implementing the method, or may be a logical module or software that can implement all or some functions of the wireless network device. The terminal device in FIG. 12 may be a chip, a chip system, or a processor that supports the terminal device in implementing the method, or may be a logical module or software that can implement all or some functions of the terminal device. The method shown in FIG. 12 may be understood as a specific implementation of the method shown in FIG. 7. The method includes the following steps.

S1201: The network device sends configuration information to the terminal device, and the terminal device receives the configuration information from the network device.

S1202: The terminal device monitors a PDCCH in M1 first time windows in N1 first time windows of a first time period based on the configuration information, where the first time period is a DRX on duration.

In this embodiment of this application, the configuration information may be used to configure the M1 first time windows that are in the N1 first time windows of the first time period and that are used to monitor the PDCCH, where N1 is an integer greater than or equal to 2, and M1 is a positive integer less than N1.

In a possible implementation, the configuration information includes time window index information, and the time window index information is used to configure the M1 first time windows. In other words, the M1 first time windows that are in the N1 first time windows of the first time period and that are used to monitor the PDCCH may be configured by using time window index information from the network device.

Specifically, one or more time window index tables may be configured in the network device and the terminal device in a manner of protocol predefinition, or in a manner of configuring by the network device and unicasting, multicasting, or broadcasting to the terminal device. Each entry in the time window index table corresponds to one first time window pattern, and each entry corresponds to one index value. For example, one or more time window index tables may be configured for different service types, for example, different service frame rates, such as 60 FPS and 120 FPS, different subcarrier spacings, and a probability distribution and a value range of jitters of service frames.

In an example, for a service with a service frame rate of 60 FPS, jitter values comply with truncated Gaussian distribution in which an average value is 0, a standard deviation is 2 ms, and a value range is [-4 ms, 4 ms], and a slot length is 0.5 ms. The first time period may be set to 8 ms, and duration of each first time window is set to 0.5 ms. In this case, the first time period includes 16 first time windows, and a corresponding time window index table may be shown in Table 3.

Each first time window pattern in Table 3 includes 16 indicator bits corresponding to a 1st first time window to a 16th first time window of the first time period. An indicator bit 0 indicates that a corresponding first time window is not used to monitor a PDCCH, and an indicator bit 1 indicates that a corresponding first time window is used to monitor a PDCCH; or an indicator bit 0 indicates that a corresponding first time window is used to monitor a PDCCH, and an indicator bit 1 indicates that a corresponding first time window is not used to monitor the PDCCH. In Table 3 and following Table 4 and Table 5, an example in which an indicator bit 0 indicates that a corresponding first time window is not used to monitor a PDCCH, and an indicator bit 1 indicates that a corresponding first time window is used to monitor a PDCCH is used for description. In addition, each entry in Table 3 corresponds to an index value, a relative power consumption value, an average schedule delay, and a first time window pattern. A corresponding entry may be located based on an index value. For example, an entry with an index value 6, a relative power consumption value 525, an average schedule delay 0.397, and a first time window pattern [0, 0, 0, 1, 0, 0, 1, 0, 1, 0, 1, 0, 1, 0, 0, 1] may be located based on the index value 6. For determining of a relative power consumption value and a schedule delay that correspond to a first time window pattern in each entry, refer to the foregoing description of a manner of determining the relative power consumption value and the average schedule delay. Details are not described again.

In addition, first time window patterns in Table 3 include different quantities of indicator bits " 1", that is, quantities of first time windows used to monitor a PDCCH are different. For each first time window pattern including a specific quantity of indicator bits "1", average schedule delays corresponding to all possible first time window patterns including the specific quantity of first time windows used to monitor a PDCCH may be determined in the foregoing manner of determining the average schedule delay, and a first time window pattern with a lowest average schedule delay is selected as the first time window pattern corresponding to the specific quantity of indicator bits "1".

**Table 3**

| Index value | Relative power consumption value | Average schedule delay /ms | First time window pattern |
|---|---|---|---|
| 1 | 387.5 | 3.75 | 0 0 0 0 0 0 0 0 0 0 0 0 0 0 0 1 |
| 2 | 415 | 1.6546 | 0 0 0 0 0 0 0 0 1 0 0 0 0 0 0 1 |
| 3 | 442.5 | 1.0139 | 0 0 0 0 0 0 1 0 0 0 1 0 0 0 0 1 |
| 4 | 470 | 0.7066 | 0 0 0 0 0 1 0 0 1 0 0 1 0 0 0 1 |
| 5 | 497.5 | 0.53 | 0 0 0 1 0 0 1 0 1 0 0 1 0 0 0 1 |
| 6 | 525 | 0.397 | 0 0 0 1 0 0 1 0 1 0 1 0 1 0 0 1 |
| 7 | 552.5 | 0.3028 | 0 0 1 0 1 0 1 0 1 0 1 0 1 0 0 1 |
| 8 | 580 | 0.25 | 0 1 0 1 0 1 0 1 0 1 0 1 0 1 0 1 |
| 9 | 607.5 | 0.2007 | 0 1 0 1 0 1 0 1 1 1 0 1 0 1 0 1 |
| 10 | 635 | 0.1543 | 0 1 0 1 0 1 1 1 1 1 0 1 0 1 0 1 |
| 11 | 662.5 | 0.1133 | 0 1 0 1 0 1 1 1 1 1 1 1 0 1 0 1 |
| 12 | 690 | 0.0794 | 0 1 0 1 1 1 1 1 1 1 1 1 0 1 0 1 |

(continued)

| Index value | Relative power consumption value | Average schedule delay /ms | First time window pattern |
|---|---|---|---|
| 13 | 717.5 | 0.0528 | 0 1 0 1 1 1 1 1 1 1 1 1 1 <br> 1 0 1 |
| 14 | 745 | 0.0267 | 1 0 1 1 1 1 1 1 1 1 1 1 1 <br> 1 0 1 |
| 15 | 772.5 | 0.0134 | 1 1 1 1 1 1 1 1 1 1 1 1 1 <br> 1 0 1 |
| 16 | 800 | 0 | 1 1 1 1 1 1 1 1 1 1 1 1 1 <br> 1 1 1 |

In an example, for a service with a service frame rate of 60 FPS, jitter values comply with truncated Gaussian distribution in which an average value is 0, a standard deviation is 2 ms, and a value range is [-4 ms, 4 ms], and a slot length is 1 ms. The first time period may be set to 8 ms, and duration of each first time window is set to 1 ms. In this case, the first time period includes eight first time windows, and a corresponding time window index table may be shown in Table 4.

Each time window pattern in Table 4 includes eight indicator bits corresponding to a 1st first time window to an 8th first time window of the first time period. An indicator bit 0 indicates that a corresponding first time window is not used to monitor a PDCCH, and an indicator bit 1 indicates that a corresponding first time window is used to monitor a PDCCH. In addition, each entry in Table 4 corresponds to an index value, a relative power consumption value, an average schedule delay, and a first time window pattern. A corresponding entry may be located based on an index value.

**Table 4**

| Index value | Relative power consumption value | Average schedule delay /ms | First time window pattern |
|---|---|---|---|
| 1 | 415 | 3.5 | 0 0 0 0 0 0 0 1 |
| 2 | 470 | 1.4255 | 0 0 0 0 1 0 0 1 |
| 3 | 525 | 0.8085 | 0 0 1 0 1 0 0 1 |
| 4 | 580 | 0.5 | 0 1 0 1 0 1 0 1 |
| 5 | 635 | 0.3085 | 0 1 0 1 1 1 0 1 |
| 6 | 690 | 0.1587 | 0 1 1 1 1 1 0 1 |
| 7 | 745 | 0.0668 | 0 1 1 1 1 1 1 1 |
| 8 | 800 | 0 | 1 1 1 1 1 1 1 1 |

In an example, for a service with a service frame rate of 60 FPS, jitter values comply with truncated Gaussian distribution in which an average value is 0, a standard deviation is 3 ms, and a value range is [-6 ms, 6 ms], and a slot length is 0.25 ms. The first time period may be set to 12 ms, and duration of each first time window is set to 2 ms. In this case, the first time period includes six first time windows, and a corresponding time window index table may be shown in Table 5.

Each time window pattern in Table 5 includes six indicator bits corresponding to a 1st first time window to a 6th first time window of the first time period. An indicator bit 0 indicates that a corresponding first time window is not used to monitor a PDCCH, and an indicator bit 1 indicates that a corresponding first time window is used to monitor a PDCCH. In addition, each entry in Table 5 corresponds to an index value, a relative power consumption value, an average schedule delay, and a first time window pattern. A corresponding entry may be located based on an index value.

**Table 5**

| Index value | Relative power consumption value | Average schedule delay /ms | First time window pattern |
|---|---|---|---|
| 1 | 650 | 5 | 0 0 0 0 0 1 |

(continued)

| Index value | Relative power consumption value | Average schedule delay /ms | First time window pattern | | | | | |
|---|---|---|---|---|---|---|---|---|
| 2 | 760 | 2 | 0 | 0 | 1 | 0 | 0 | 1 |
| 3 | 870 | 1 | 0 | 1 | 0 | 1 | 0 | 1 |
| 4 | 980 | 0.5049 | 0 | 1 | 1 | 1 | 0 | 1 |
| 5 | 1090 | 0.18242 | 0 | 1 | 1 | 1 | 1 | 1 |
| 6 | 1200 | 0 | 1 | 1 | 1 | 1 | 1 | 1 |

It should be understood that, first time window patterns in Table 4 or Table 5 also include different quantities of indicator bits "1", that is, quantities of first time windows used to monitor a PDCCH are different. For each first time window pattern including a specific quantity of indicator bits "1" in Table 4 or Table 5, average schedule delays corresponding to all possible first time window patterns including the specific quantity of first time windows used to monitor a PDCCH may also be determined in the foregoing manner of determining the average schedule delay, and a first time window pattern with a lowest average schedule delay is selected as the first time window pattern corresponding to the specific quantity of indicator bits "1".

In addition, Table 3 to Table 5 are described by using an example in which an index value is equal to a quantity of indicator bits "1" in a first time window pattern corresponding to the index value. In some implementations, in a time window index table, an index value may be unequal to a quantity of indicator bits "1" in a first time window pattern corresponding to the index value; or some index values are equal to quantities of indicator bits "1" in first time window patterns corresponding to the index values, and some index values are unequal to quantities of indicator bits "1" in first time window patterns corresponding to the index values. This is not limited in this application.

Table 3 to Table 5 are merely examples. It may be understood that for different service types, for example, different jitter distribution parameters and duration of a first time window, a time window index table may change. In other words, for different service types, different time window index tables may be configured in embodiments of this application.

Certainly, some or all of the one or more time window index tables may alternatively be combined to form a new time window index table applicable to one or more different service types. For example, some entries (for example, a second row to a tenth row) in Table 3 may be extracted to form a new time window index table; or some entries in Table 3 and some entries in Table 4 may be extracted, and non-repeated index values are re-assigned to the entries to form a new time window index table.

In addition, for the relative power consumption value and the average schedule delay, one of the relative power consumption value and the average schedule delay may appear in the time window index table, or the relative power consumption value and the average schedule delay may not appear in the time window index table. Further, the relative power consumption value, the average schedule delay, and the like in the time window index table may alternatively be replaced with one value. For example, a performance value may be used to comprehensively measure the relative power consumption value and the average schedule delay, and the performance value is used to replace the relative power consumption value and the average schedule delay in the time window index table, where the performance value may be a weighted average value, a product, or the like of the relative power consumption value and the average schedule delay.

When generating the configuration information, the network device may select, according to a specific strategy, an index value from the time window index table as the time window index information included in the configuration information. For example, the network device may select, in a random selection manner, an index value from the time window index table as the time window index information included in the configuration information; or may select an index value (for example, the index value 6) by default as the time window index information included in the configuration information; or may select an index value as the time window index information included in the configuration information based on a requirement of the terminal device on a power consumption reduction proportion (a proportion relative to a relative power consumption value when the first time period is totally used to monitor the PDCCH) or an average schedule delay; or select an index value as the time window index information included in the configuration information by comprehensively considering requirements of the terminal device on the power consumption reduction proportion and the average schedule delay.

The time window index information may be carried (or configured) in a setting field (or an information element) in DCI or RRC signaling in the sent configuration information. In this application, an example in which the time window index information is carried in a setting field is used for description. For example, a discontinuous reception on duration raster (DRX on duration raster, DODR) index (DODR-index) field is set for carrying. After receiving the configuration information from the network device, the terminal device may determine a first time window pattern based on the time window index information, monitor the PDCCH in the M1 first time windows in the first time window pattern, and do not monitor the PDCCH in the (N1-M1) first time windows. This reduces power consumption.

In another possible implementation, the configuration information includes time window bitmap (bitmap) information, and the time window bitmap information is used to configure the M1 first time windows. In other words, the M1 first time windows that are in the N1 first time windows of the first time period and that are used to monitor the PDCCH may alternatively be configured by using time window bitmap information from the network device.

The time window bitmap information may be carried (or configured) in a setting field (or an information element) in DCI or RRC signaling in the sent configuration information. For example, a DODR bitmap (DODR-bitmap) field may be set in the configuration information to carry the time window bitmap information. A quantity of indicator bits in the time window bitmap information may be equal to N1. A first indicator bit in the time window bitmap information indicates whether a $1^{st}$ first time window of the first time period is used to monitor the PDCCH, a second indicator bit in the time window bitmap information indicates whether a $2^{nd}$ first time window of the first time period is used to monitor the PDCCH, a third indicator bit in the time window bitmap information indicates whether a $3^{rd}$ first time window of the first time period is used to monitor the PDCCH, and so on. Specifically, an indicator bit 1 indicates that a first time window is used to monitor a PDCCH, and an indicator bit 0 indicates that a first time window is not used to monitor a PDCCH; or an indicator bit 0 indicates that a first time window is used to monitor a PDCCH, and an indicator bit 1 indicates that a first time window is not used to monitor a PDCCH. In this embodiment of this application, an example in which an indicator bit 1 indicates that a first time window is used to monitor a PDCCH, and an indicator bit 0 indicates that a first time window is not used to monitor a PDCCH is used for description.

For example, if time window bitmap information is "[0, 0, 0, 1, 0, 0, 1, 1]", it indicates that a $4^{th}$ first time window, a $7^{th}$ first time window, and an $8^{th}$ first time window of eight first time windows of a first time period are used to monitor a PDCCH, and other first time windows are not used to monitor the PDCCH.

The first time window pattern in Table 3, Table 4, or Table 5 is used as an example. One first time window pattern corresponding to one index value in Table 3, Table 4, or Table 5 may be considered as one piece of candidate time window bitmap information. When generating the configuration information, the network device may select, according to a specific strategy, one of pieces of candidate time window bitmap information as the time window bitmap information in the configuration information. For example, one of the pieces of candidate time window bitmap information may be randomly selected as the time window bitmap information in the configuration information. Alternatively, one of the pieces of candidate time window bitmap information is selected as the time window bitmap information in the configuration information based on a priority of a lowest relative power consumption value or a lowest average schedule delay.

After receiving the configuration information from the network device, the terminal device may determine, based on the time window bitmap information included in the configuration information, the M1 first time windows used to monitor the PDCCH in the first time period.

In an example, time window bitmap information is "[0, 0, 0, 1, 0, 0, 1, 1]", and duration of a first time period is 8 ms. If a quantity of indicator bits in the time window bitmap information is 8, a quantity of first time windows of the first time period is 8. The terminal device determines, based on the time window bitmap information, to monitor a PDCCH in a $4^{th}$ first time window, a $7^{th}$ first time window, and an $8^{th}$ first time window of the first time period.

In addition, in some implementations, a quantity of indicator bits in the DODR-bitmap field may be greater than a value of the quantity N1 of first time windows of the first time period. In this case, the time window bitmap information actually occupies some indicator bits in the DODR-bitmap field. For example, a quantity of indicator bits in a DODR-bitmap field is 20, and a value of N1 is 8. In this case, time window bitmap information in configuration information occupies eight indicator bits in the DODR-bitmap field, and other indicator bits in the DODR-bitmap field may be filled with 0. In this case, to facilitate determining, by the terminal device, the time window bitmap information carried in the DODR-bitmap field, the configuration information may alternatively be used to configure the value of N1 or duration of one of the N1 first time windows.

In an example, the value of N1 or the duration of one of the N1 first time windows may be carried (configured) in a setting field (or an information element) in DCI or RRC signaling in the sent configuration information.

For example, a DODR number (DODR-num) field is set to configure the value of N1. If the duration of the first time period is 8 ms, the quantity of indicator bits in the time window bitmap information is 8, and the quantity of indicator bits in the DODR-bitmap field is 20, the network device may configure the value of N1 to 8 based on the DODR-num field. The terminal device may determine, in a manner such as a specification of a protocol or a configuration of the network device, eight specific indicator bits in the DODR-bitmap field are occupied by the time window bitmap information, for example, first eight indicator bits or last eight indicator bits in the DODR-bitmap field are occupied.

For example, a DODR time granularity (DODR-timegranularity) field is set to configure the duration of one of the N1 first time windows. If the duration of the first time period is 8 ms, the quantity N1 of first time windows of the first time period is 8, the duration of one first time window is 1 ms, the quantity of indicator bits in the time window bitmap information is 8, and the quantity of indicator bits in the DODR-bitmap field is 20, the network device may configure the duration of one of the N1 first time windows to 1 ms based on the DODR-timegranularity field. The terminal device may determine, based on a case that the duration of the first time period is 8 ms and the duration of one of the N1 first time windows is 1 ms, that the quantity N1 of first time windows of the first time period is 8 and the quantity of indicator bits in the time window bitmap information is 8. The terminal device may determine, in a manner such as a specification of a protocol or a configuration of the network device, eight specific indicator bits in the DODR-bitmap field are occupied by the time window bitmap information, for example, first eight indicator bits or last eight indicator bits in the DODR-bitmap field are occupied.

In addition, to further meet a personalized requirement of a user, the terminal device may also send DRX preference information to the network device, and the network device receives the DRX preference information from the terminal device. The DRX preference information indicates a preference for power consumption and/or a preference for a delay. When generating the configuration information, the network device may consider power consumption reduction or an average schedule delay caused by the M1 first time windows that are in the N1 first time windows of the first time period and that are used to monitor the PDCCH and that are configured by using the configuration information, to meet the DRX preference information reported by the terminal device.

The preference for power consumption and/or the preference for the delay may be a preference for power consumption reduction, or a preference for a low average schedule delay, or may be a power consumption level desired by the terminal device, for example, 20% power consumption reduction, or may be an average schedule delay that can be accepted by the terminal device, for example, a maximum average schedule delay is 0.3 ms.

In an example, the terminal device may send the DRX preference information to the network device by using user assistance information (UE assistance information, UAI). For example, a preferred DODR type (preferred DODR-type) field may be added to the UAI to represent whether the terminal device prefers power consumption reduction or the low average schedule delay. For example, if the preferredDODR-type field is 0, it indicates that the terminal device prefers power consumption reduction; or if the preferredDODR-type field is 1, it indicates that the terminal device prefers the low average schedule delay. For another example, if the preferredDODR-type field is an enumerated value "power", it indicates that the terminal device prefers power consumption reduction; or if the preferredDODR-type field is an enumerated value "delay", it indicates that the terminal device prefers the low average schedule delay.

Optionally, a preferred DODR power consumption (preferredDODR-power-consumption) field may be added to the UAI to represent the desired power consumption level. Optionally, a DODR average schedule delay (preferred-DODR-average-schedule-delay) field may alternatively be added to the UAI to represent the average schedule delay that can be accepted.

For example, if the preferredDODR-type field in the UAI sent by the terminal device is 0, the network device selects a first time window pattern with low power consumption (for example, a relative power consumption value) and configures the first time window pattern for the terminal device by using the configuration information. For example, the network device selects a first time window pattern from X first time window patterns with lowest power consumption and configures the first time window pattern for the terminal device by using the configuration information, where X is an integer greater than or equal to 1. In an example, a value of X may be 4. If the preferredDODR-type field in the UAI sent by the terminal device is 0, the network device may select a first time window pattern from four first time window patterns with lowest power consumption and configure the first time window pattern for the terminal device by using the configuration information.

For example, if the preferredDODR-type field in the UAI sent by the terminal device is 1, the network device selects a first time window pattern with a low average schedule delay and configures the first time window pattern for the terminal device by using the configuration information. For example, the network device selects a first time window pattern from Y first time window patterns with a lowest average schedule delay and configures the first time window pattern for the terminal device by using the configuration information, where Y is an integer greater than or equal to 1. In an example, a value of Y may be 3. If the preferredDODR-type field in the UAI sent by the terminal device is 1, the network device may select a first time window pattern from three first time window patterns with a lowest average schedule delay and configure the first time window pattern for the terminal device by using the configuration information.

If there is the preferredDODR-power-consumption field in the UAI, it indicates that there is a power consumption level indication. In this case, the network device may select, based on the power consumption level indicated by the preferredDODR-power-consumption field, the first time window pattern and configure the first time window pattern for the terminal device by using the configuration information. If there is the preferredDODR-average-schedule-delay field in the UAI, it indicates that there is an average schedule delay level indication. In this case, the network device may select, based on the average schedule delay level indicated by the preferredDODR-average-schedule-delay field, the first time window pattern and configure the first time window pattern for the terminal device by using the configuration information. Certainly, if there is the preferredDODR-power-consumption field and the preferredDODR-average-schedule-delay field in the UAI, it indicates that there is the power consumption level indication and the average scheduling delay level indication. In this case, the network device may select, based on the power consumption level indicated by the preferredDODR-power-consumption field and the average schedule delay level indicated by the preferredDODR-average-schedule-delay field, the first time window pattern and configure the first time window pattern for the terminal device by using the configuration information.

In an example, there is a preferredDODR-power-consumption field in the UAI, and an indicated power consumption level is 20% power consumption reduction. Table 3 is used as an example. The network device may select a first time window pattern from first time window patterns corresponding to the index 1 to the index 10, and configure the first time window pattern for the terminal device. Therefore, more than 20% power consumption reduction can be implemented with the first time window pattern corresponding to the index 1 to the index 10 relative to the first time window pattern corresponding to the index 16 (that is, all the first time windows are used to monitor the PDCCH).

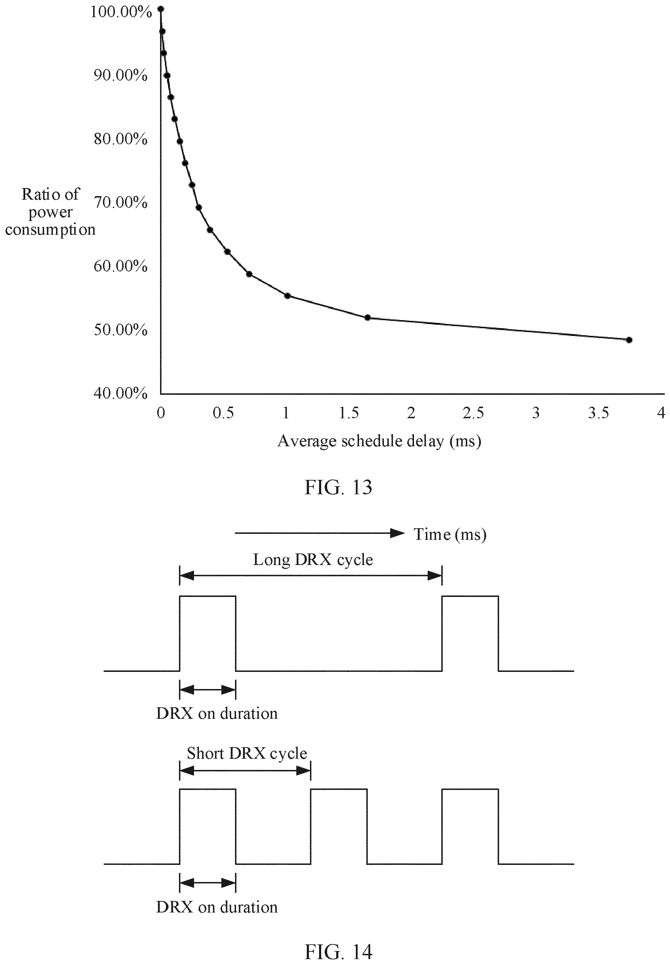

FIG. 13 shows a ratio of power consumption corresponding to each first time window pattern shown in Table 3 to power consumption of continuously monitoring the PDCCH in the first time period and an average schedule delay corresponding to each first time window pattern. In FIG. 13, each point represents one first time window pattern, a horizontal axis represents an average schedule delay, a vertical axis represents a ratio of power consumption of a first time window pattern to power consumption of continuously monitoring the PDCCH in the first time period, and points from left to right on the horizontal axis sequentially correspond to the first time window pattern with the index 16, the first time window pattern with the index 15, ..., and the first time window pattern with the index 1 in Table 3. It can be seen from FIG. 13 that, by setting a first time window, power consumption can be greatly reduced when an average schedule delay is slightly increased. For example, if the first time window pattern with the index value 6 is set, (800-525)/800=34.38% power consumption can be reduced, and the average schedule delay is increased by only 0.397 ms.

Currently, a balance between a battery lifespan and a delay of the terminal device needs to be considered for selection of a DRX cycle. In one aspect, a longer DRX cycle is beneficial to prolonging the battery lifespan of the terminal device. In another aspect, when new data transmission is performed, a shorter DRX cycle is beneficial to a faster response. To meet the foregoing requirement, in some implementations, the terminal device may configure two DRX cycles, namely, one long DRX cycle and one short DRX cycle. At a moment, the terminal device uses one of the two DRX cycles for configuration. In an example, as shown in FIG. 14, the network device may configure a long DRX cycle and a short DRX cycle for the terminal device, duration of the long DRX cycle is twice duration of the short DRX cycle, and duration of a DRX on duration of the long DRX cycle may be the same as duration of a DRX on duration of the short DRX cycle.

As an example, for a video service in an XR service, a group of pictures (group of pictures, GOP) may include one I frame (intra frame) and a plurality of P frames (predicted frames). The I frame is an intra frame reference frame, and a terminal device restores a picture based on data of the I frame during decoding. The P frame is a predicted-coded frame, and represents data different from that of a picture of a previous frame. During decoding, the terminal device needs to superimpose a previously buffered picture frame with a difference defined by the I frame to generate a picture. Because the previous picture frame needs to be referred to when the P frame is decoded, the terminal device needs longer decoding time. Therefore, it is required that an air interface should complete transmission within shorter time. For example, a transmission delay budget of the air interface for the P frame may be 8 ms. However, when the I frame is decoded, only the data of the I frame is required, and the terminal device needs shorter decoding time. Therefore, a requirement for a transmission delay of an air interface is low. For example, a transmission delay budget of the air interface for the I frame may be 12 ms. Therefore, when the video service is performed, a pattern corresponding to a time window that is used to monitor a PDCCH and that has a shorter average schedule delay may be configured for the P frame, and a pattern corresponding to a time window that is used to monitor a PDCCH and that has a longer average schedule delay may be configured for the I frame.

Specifically, for the video service in the XR service, one GOP may include one I frame and a plurality of P frames, and an interval between two adjacent I frames is greater than an interval between two adjacent P frames. The network device may configure a short DRX cycle for the terminal device based on the interval between the P frames, configure a long DRX cycle for the terminal device based on the interval between the I frames, and separately configure, for a DRX on duration in the long DRX cycle and a DRX on duration in the short DRX cycle, patterns corresponding to time windows used to monitor a PDCCH with different delays.

In some implementations, if a long DRX cycle and a short DRX cycle are configured for the terminal device, the first time period is a DRX on duration of the long DRX cycle. The configuration information sent by the network device to the terminal device may alternatively be used to configure M2 second time windows that are in N2 second time windows of a second time period and that are used to monitor the PDCCH, where the second time period is a DRX on duration of a short DRX cycle, N2 is an integer greater than or equal to 2, and M2 is a positive integer less than N2. The terminal device may further monitor the PDCCH in the M2 second time windows in the N2 second time windows of the second time period based on the configuration information.

It should be understood that, for an implementation in which the network device configures, by using the configuration information, the M2 second time windows that are in the N2 second time windows of the second time period and that are used to monitor the PDCCH, refer to the implementation of configuring, by using the configuration information, the M1 first time windows that are in the N1 first time windows of the first time period and that are used to monitor the PDCCH. For example, in the configuration information, a DODR-index2 field is added to carry time window index information of the M2 second time windows that are in the N2 second time windows of the second period and that are used to monitor the PDCCH, or a DODR-bitmap2 field is added to carry time window bitmap information of the M2 second time windows that are in the N2 second time windows of the second period and that are used to monitor the PDCCH.

It may be understood that, in some embodiments, for the first time period and the second time period that do not overlap, that is, there is no overlapping between the first time period and the second time period in time, the terminal device not only monitors the PDCCH in the M1 first time windows of the first time period, but also monitors the PDCCH in the M2 second time windows of the second time period. For the first time period and the second time period that overlap, that is, there is overlapping between the first time period and the second time period in time, because the network device does not schedule transmission of a service frame corresponding to the short DRX cycle when scheduling transmission of a service frame corresponding to the long DRX cycle, the terminal device may monitor the PDCCH only in the M1 first time windows of the first time period.

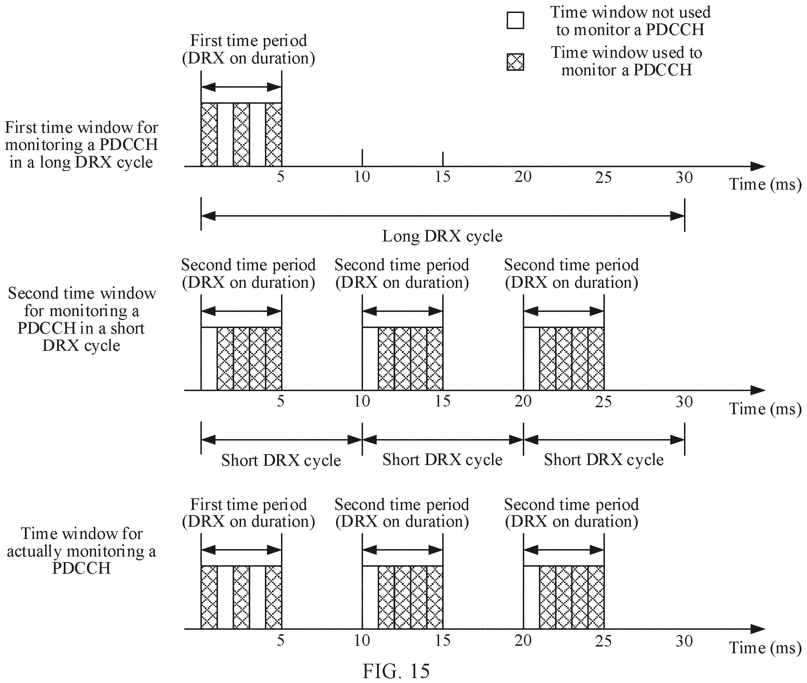

For example, the long DRX cycle is 30 ms, the short DRX cycle is 10 ms, the DRX on duration of the long DRX cycle and the DRX on duration of the short DRX cycle are both 5 ms, and duration of a first time window and duration of a second time window are both 1 ms. As shown in FIG. 15, a first time window pattern of the DRX on duration of the long DRX cycle is [1, 0, 1, 0, 1], and a second time window pattern of the DRX on duration of the short DRX cycle is [0, 1, 1, 1, 1]. When the DRX on duration of the long DRX cycle overlaps the DRX on duration of the short DRX cycle, the terminal device monitors the PDCCH in the first time window of the DRX on duration of the long DRX cycle.

Scenario 2: Duration of a first time period is a DRX cycle.

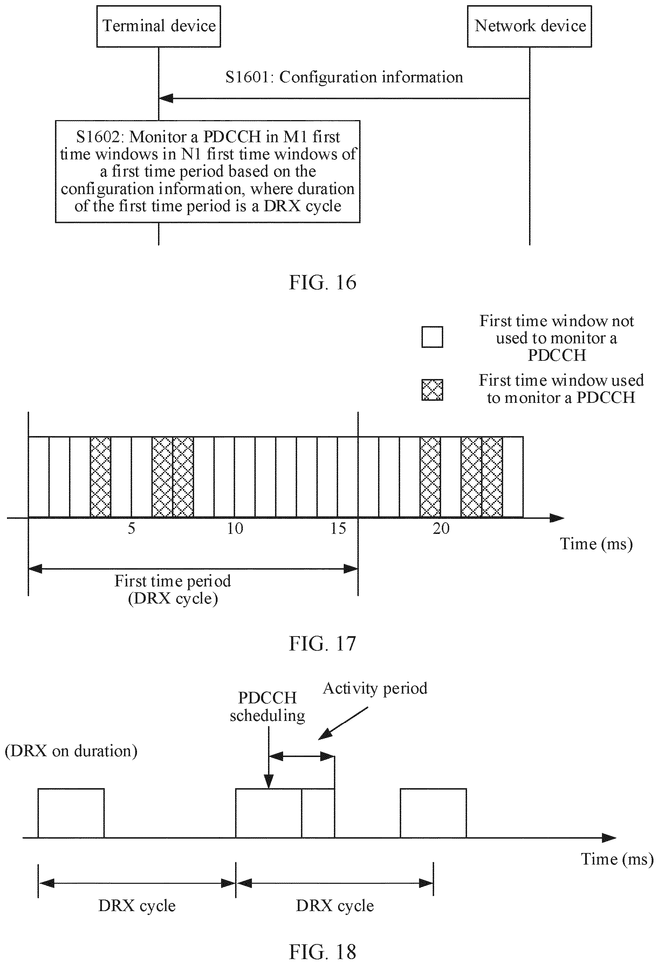

FIG. 16 is a diagram of another communication method according to an embodiment of this application. In FIG. 16, an example in which a network device and a terminal device are execution bodies for interaction is used to illustrate the method. However, execution bodies for interaction are not limited in this application. For example, the network device in FIG. 16 may be a chip, a chip system, or a processor that supports the network device in implementing the method, or may be a logical module or software that can implement all or some functions of the wireless network device. The terminal device in FIG. 16 may be a chip, a chip system, or a processor that supports the terminal device in implementing the method, or may be a logical module or software that can implement all or some functions of the terminal device. The method shown in FIG. 16 may be understood as a specific implementation of the method shown in FIG. 7. The method includes the following steps.

S1601: The network device sends configuration information to the terminal device, and the terminal device receives the configuration information from the network device.

S1602: The terminal device monitors a PDCCH in M1 first time windows in N1 first time windows of a first time period based on the configuration information, where duration of the first time period is a DRX cycle.

In this embodiment of this application, the configuration information may be used to configure the M1 first time windows that are in the N1 first time windows of the first time period and that are used to monitor the PDCCH, where N1 is an integer greater than or equal to 3, and M1 is an integer less than N1 and greater than or equal to 2.

In a possible implementation, the M1 first time windows used to monitor the PDCCH are deployed in a decentralized manner in the DRX cycle, that is, there are at least two first time windows that are inconsecutive in time in the M1 first time windows. For example, the duration of the first time period is 16 ms, and a first time window pattern is [0, 0, 0, 1, 0, 0, 1, 1, 0, 0, 0, 0, 0, 0, 0, 0], where 1 in the first time window pattern indicates that a first time window is used to monitor a PDCCH, and 0 indicates that the first time window is not used to monitor the PDCCH. As shown in FIG. 17, the first time period is divided into 16 first time windows, duration of one first time window is 1 ms, and a 4th first time window, and a 7th first time window and an 8th first time window of the first time period that correspond to duration between a 3rd ms and a 4th ms and duration from a 6th ms to an 8th ms respectively are used to monitor the PDCCH, and other time windows are not used to monitor the PDCCH. The 4th first time window and the 7th first time window are inconsecutive in time.

In a possible implementation, the configuration information includes time window index information, and the time window index information is used to configure the M1 first time windows. In other words, the M1 first time windows that are in the N1 first time windows of the first time period and that are used to monitor the PDCCH may be configured by using time window index information from the network device.

Specifically, one or more time window index tables may be configured in the network device and the terminal device in a manner of protocol predefinition, or in a manner of configuring by the network device and unicasting, multicasting, or broadcasting to the terminal device. Each entry in the time window index table corresponds to one first time window pattern, and each entry corresponds to one index value. It may be understood that at least one first time window pattern in the time window index table meets a condition that there are at least two first time windows that are inconsecutive in time in the M1 first time windows that are in the N1 first time windows of the first time period and that are used to monitor the PDCCH.

The first time window pattern in the time window index table shown in Table 4 is used as an example. The first time window patterns corresponding to the index values 1, 7, and 8 in Table 4 do not meet the condition that there are at least two first time windows that are inconsecutive in time in the M1 first time windows that are in the N1 first time windows of the first time period and that are used to monitor the PDCCH. Therefore, the first time window pattern corresponding to the M1 first time windows that are in the N1 first time windows of the first time period and that are configured by the network device by using the configuration information is ensured to not correspond to the first time window patterns with the index values 1, 7, and 8. Certainly, the entries corresponding to the index values 1, 7, and 8 in Table 4 may alternatively be deleted. The network device selects, from the first time window patterns corresponding to the index values 2 to 6, a first time window pattern corresponding to the M1 first time windows that are in the N1 first time windows of the first time period and that are configured by using the configuration information.

Specifically, for an implementation of how to configure a time window index table based on a service type and how to configure, by using the time window index information from the network device, the M1 first time windows that are in the N1 first time windows of the first time period and that are used by the terminal device to monitor the PDCCH, refer to the implementation in Scenario 1. Details are not described again.

In an example, the time window index information may be carried (or configured) in a setting field (or an information element) in DCI or RRC signaling in the sent configuration information. For example, a discontinuous reception raster (DRX raster, DR) index (DR-index) field is set for carrying. After receiving the configuration information from the network device, the terminal device may determine a first time window pattern based on the time window index information, monitor the PDCCH in the M1 first time windows in the first time window pattern, and do not monitor the PDCCH in (N1-M1) first time windows.

In another possible implementation, the M1 first time windows that are in the N1 first time windows of the first time period and that are used to monitor the PDCCH may alternatively be configured by using time window bitmap information from the network device. It should be understood that, a first time window pattern configured by using the time window bitmap information also meets that there are at least two first time windows that are inconsecutive in time in the M1 first time windows that are in the N1 first time windows of the first time period and that are used to monitor the PDCCH.

In an example, the time window bitmap information may be carried (or configured) in a setting field (or an information element) in DCI or RRC signaling in the sent configuration information. For example, a DR bitmap (DR-bitmap) field is set in the configuration information to carry the time window bitmap information. A quantity of indicator bits in the time window bitmap information may be equal to N1. A first indicator bit in the time window bitmap information indicates whether a $1^{st}$ first time window of the first time period is used to monitor the PDCCH, a second indicator bit in the time window bitmap information indicates whether a $2^{nd}$ first time window of the first time period is used to monitor the PDCCH, a third indicator bit in the time window bitmap information indicates whether a $3^{rd}$ first time window of the first time period is used to monitor the PDCCH, and so on. Specifically, an indicator bit 1 indicates that a first time window is used to monitor a PDCCH, and an indicator bit 0 indicates that a first time window is not used to monitor a PDCCH; or an indicator bit 0 indicates that a first time window is used to monitor a PDCCH, and an indicator bit 1 indicates that a first time window is not used to monitor a PDCCH. In this embodiment of this application, an example in which an indicator bit 1 indicates that a first time window is used to monitor a PDCCH, and an indicator bit 0 indicates that a first time window is not used to monitor a PDCCH is used for description.

In addition, in some implementations, there is a case in which a quantity of indicator bits in the DR-bitmap field may be greater than a value of N1, and the time window bitmap information actually occupies only some indicator bits in the DR-bitmap field. For example, the quantity of indicator bits in the DR-bitmap field is 20, and the value of N1 is 16. In this case, the time window bitmap information in the configuration information occupies 16 indicator bits in the DR-bitmap field, and other indicator bits in the DR-bitmap field may be filled with 0. To facilitate determining, by the terminal device, the time window bitmap information carried in the DR-bitmap field, the configuration information may alternatively be used to configure a value of N1 or duration of one of the N1 first time windows.

In an example, the value of N1 or the duration of one of the N1 first time windows may be carried (configured) in a setting field (or an information element) in DCI or RRC signaling in the sent configuration information.

For example, a DR number (DR-num) field is set to configure the value of N1. If the duration of the first time period is 16 ms, the quantity of indicator bits in the time window bitmap information is 16, and the quantity of indicator bits in the DR-bitmap field is 20, the network device may configure the value of N1 to 16 based on the DR-num field. The terminal device may determine, in a manner such as a specification of a protocol or a configuration of the network device, 16 specific indicator bits in the DR-bitmap field are occupied by the time window bitmap information, for example, first 16 indicator bits or last 16 indicator bits in the DR-bitmap field are occupied.

For example, a DR time granularity (DR-timegranularity) field is set to configure the duration of one of the N1 first time windows. If the duration of the first time period is 16 ms, the quantity N1 of first time windows of the first time period is 16, the duration of one first time window is 1 ms, the quantity of indicator bits in the time window bitmap information is 16, and the quantity of indicator bits in the DR-bitmap field is 20, the network device may configure the duration of one of the N1 first time windows to 1 ms based on the DR-timegranularity field. The terminal device may determine, based on a case that the duration of the first time period is 16 ms and the duration of one of the N1 first time windows is 1 ms, that the quantity N1 of first time windows of the first time period is 16 and the quantity of indicator bits in the time window bitmap information is 16. The terminal device may determine, in a manner such as a specification of a protocol or a configuration of the network device, 16 specific indicator bits in the DR-bitmap field are occupied by the time window bitmap information, for example, first 16 indicator bits or last 16 indicator bits in the DODR-bitmap field are occupied.

In addition, similar to Scenario 1, to further meet a personalized requirement of a user, the terminal device may also send DRX preference information to the network device, and the network device receives the DRX preference information from the terminal device. The DRX preference information indicates a preference for power consumption and/or a preference for a delay. When generating the configuration information, the network device may consider power consumption reduction and/or an average schedule delay caused by the M1 first time windows that are in the N1 first time windows of the first time period and that are used to monitor the PDCCH and that are configured by using the configuration information, to meet the DRX preference information reported by the terminal device. Specifically, an implementation of sending, by the terminal device, the DRX preference information to the network device and how the network device selects a first time window pattern based on the DRX preference information and configures the first time window pattern for the terminal device by using the configuration information is similar to the implementation in Scenario 1. Details are not described again.

In addition, in a DRX mechanism, after the terminal device is scheduled and receives or sends data in one slot, the terminal device may continue to be scheduled in next several slots. If the terminal device receives or sends the data in a next DRX cycle, an extra delay is caused. To reduce a schedule delay, after obtaining PDCCH scheduling in a DRX on duration, the terminal device configures an activity period, and starts a DRX activity timer (DRX activity timer). As shown in FIG. 18, after obtaining PDCCH scheduling in a DRX on duration, the terminal device starts a DRX activity timer, and continuously monitors a PDCCH in an activity period until the DRX activity timer expires. If there is new PDCCH scheduling during monitoring of the PDCCH, the DRX activity timer is restarted.

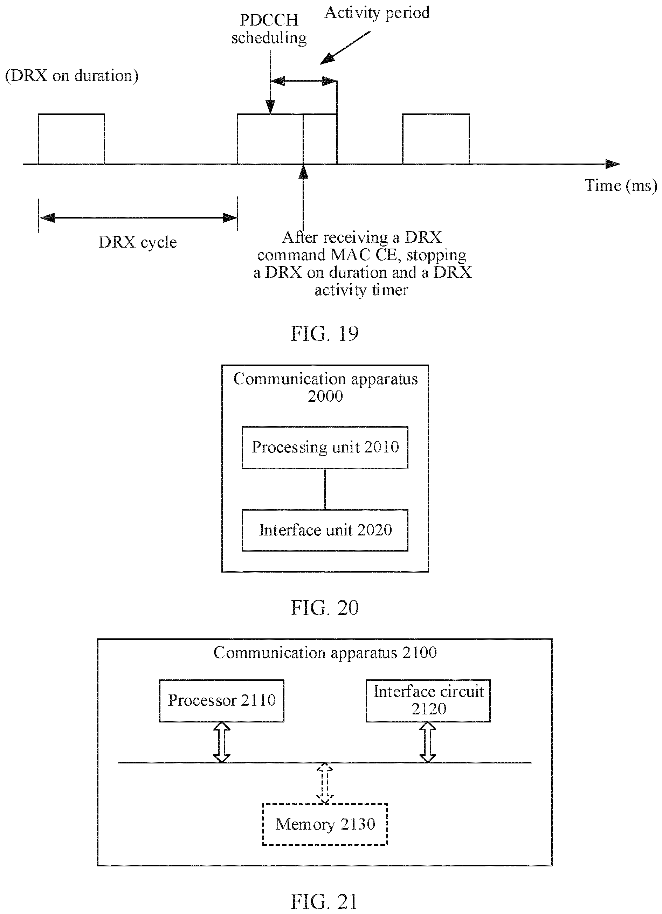

To prevent the terminal device from failing to enter a sleep state in time due to excessively long duration of both the DRX on duration and the DRX activity timer, as shown in FIG. 19, the network device may send a DRX command (DRX command) to the terminal device by using a MAC CE. After receiving a DRX command MAC CE (namely, a MAC CE carrying the DRX command), the terminal device stops the DRX on duration and the DRX activity timer, and enters the sleep state.

It should be understood that the foregoing mechanism of configuring one activity period and stopping monitoring the PDCCH and entering the sleep state after the DRX command MAC CE from the network device is received is configured is also applicable to embodiments of this application.

In an example, after obtaining PDCCH scheduling in a first time window used to monitor a PDCCH, the terminal device starts a DRX activity timer, and continuously monitors the PDCCH in an activity period until the DRX activity timer expires. If there is new PDCCH scheduling during monitoring of the PDCCH, the DRX activity timer is restarted.

When monitoring a PDCCH in a first time window or an activity period in a DRX cycle, the terminal device stops a DRX activity timer after receiving a DRX command MAC CE, stops monitoring the PDCCH in a remaining first time window in the DRX cycle, and enters a sleep state.

As described above, in the DRX mechanism, the terminal device is scheduled and receives or sends data continuously. After the terminal device is scheduled and receives or sends data in one slot, the data may be scheduled in next several slots. For example, the terminal device receives one or more data packets of a video frame in a slot, and remaining data packets of the video frame are scheduled in next several slots. Therefore, in some implementations, the terminal device receives PDCCH scheduling in a first time window used to monitor a PDCCH, and after the started DRX activity timer expires, stops monitoring the PDCCH in a remaining first time window in a current DRX cycle. In other words, if the terminal device receives PDCCH scheduling in a first time window used to monitor a PDCCH, after the DRX activity timer is started, the terminal device continues to monitor the PDCCH only in an activity period in which the DRX activity timer does not expire in a current DRX cycle. If the DRX activity timer expires, even if there is still a first time window that can be used to monitor the PDCCH in the DRX cycle in which the DRX activity timer is started, the terminal device no longer monitors the PDCCH, but enters a sleep state. This reduces power consumption.

In an example, duration of the first time period is a DRX cycle, a first time window pattern is [0, 1, 0, 0, 0, 0, 1, 1, 0, 0, 0, 0, 0, 0, 0, 0], duration of one first time window is 1 ms, and timing duration of a DRX activity timer is 4 ms. Based on the first time window pattern, the terminal device needs to monitor the PDCCH in a 2nd first time window, a 7th first time window, and an 8th first time window. If the terminal device detects PDCCH scheduling in the 2nd first time window through monitoring, the terminal device starts a DRX activity timer, and the terminal device continues to monitor the PDCCH in an activity period (a 3rd first time window to a 6th first time window) in which the DRX activity timer does not expire. If the terminal device does not receive PDCCH scheduling in the activity period again, after the DRX activity timer expires, the terminal device does not monitor the PDCCH in the 7th first time window to a 16th first time window.

In addition, it should be understood that, in embodiments of this application, the first time window pattern is not limited to being represented in a binary form, that is, the first time window pattern is not limited to having only 0 and 1. In some implementations, the first time window pattern may alternatively be represented in an octal form, a hexadecimal form, or the like. For example, when the first time window pattern is represented in a hexadecimal form, an indicator bit in the first time window pattern may be any value of 0, 1, 2, 3, 4, 5, 6, 7, 8, 9, A, B, C, D, E or F. An indicator bit 0 indicates that a first time window corresponding to the indicator bit is not used to monitor a PDCCH, and an indicator bit (for example, any value of 1 to 9 or A to F) except the indicator bit 0 indicates that a first time window corresponding to the indicator bit is used to monitor a PDCCH.

It may be understood that, to implement the functions in the foregoing embodiments, a network device and a terminal device include corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

FIG. 20 and FIG. 21 each are a diagram of a possible structure of a communication apparatus according to an embodiment of this application. The communication apparatus may be configured to implement functions of the terminal device or the network device in the foregoing method embodiments. Therefore, beneficial effect of the foregoing method embodiments can also be implemented. In this embodiment of this application, the communication apparatus may be one of the terminal devices 120a to 120j shown in FIG. 2, or may be the network device 110a or 110b shown in FIG. 2, or may be a module (for example, a chip) used in a terminal device or a network device.

As shown in FIG. 20, the communication apparatus 2000 includes a processing unit 2010 and an interface unit 2020. The communication apparatus 2000 is configured to implement the functions of the terminal device or the network device in the method embodiment shown in FIG. 12 or FIG. 16.

When the communication apparatus 2000 is configured to implement the functions of the terminal device in the method embodiment shown in FIG. 12:

the interface unit 2020 is configured to receive configuration information from a network device; and
the processing unit 2010 is configured to control, based on the configuration information, the communication apparatus 2000 to monitor a physical downlink control channel PDCCH in M1 first time windows in N1 first time windows of a first time period, where the first time period is a discontinuous reception DRX on duration, N1 is an integer greater than or equal to 2, and M1 is a positive integer less than N1.

In a possible design, the configuration information includes time window bitmap information, and the time window bitmap information is used to configure the M1 first time windows.

In a possible design, the configuration information is further used to configure a value of N1 or duration of one of the N1 first time windows.

In a possible design, the configuration information includes time window index information, and the time window index information is used to configure the M1 first time windows.

In a possible design, a first time window pattern corresponding to the M1 first time windows is one of a plurality of first time window patterns.

In a possible design, the interface unit 2020 is further configured to send DRX preference information to the network device, where the DRX preference information indicates a preference for power consumption and/or a preference for a delay.

In a possible design, the processing unit 2010 is further configured to control, based on the configuration information, the communication apparatus 2000 to monitor the PDCCH in M2 second time windows in N2 second time windows of a second time period, where the first time period is a DRX on duration of a long DRX cycle, the second time period is a DRX on duration of a short DRX cycle, N2 is an integer greater than or equal to 2, and M2 is a positive integer less than N2.

In a possible design, the processing unit 2010 is further configured to obtain M2 second time windows in N2 second time windows of a second time period based on the configuration information, where the first time period is a DRX on duration of a long DRX cycle, the second time period is a DRX on duration of a short DRX cycle, N2 is an integer greater than or equal to 2, and M2 is a positive integer less than N2.

The processing unit 2010 is further configured to: when the first time period and the second time period do not overlap in time, control the communication apparatus 2000 to monitor the PDCCH in the M2 second time windows.

That the processing unit 2010 controls the communication apparatus 2000 to monitor the PDCCH in the M1 first time windows in the N1 first time windows of the first time period includes:
when the first time period and the second time period overlap in time, controlling the communication apparatus 2000 to monitor the PDCCH in the M1 first time windows.

When the communication apparatus 2000 is configured to implement the functions of the terminal device in the method embodiment shown in FIG. 16:

the interface unit 2020 is configured to receive configuration information from a network device; and
the processing unit 2010 is configured to control, based on the configuration information, the communication apparatus 2000 to monitor a PDCCH in M1 first time windows in N1 first time windows of a first time period, where duration of the first time period is a discontinuous reception DRX cycle, N1 is an integer greater than or equal to 3, and M1 is an integer less than N1 and greater than or equal to 2.

In a possible design, there are at least two first time windows that are inconsecutive in time in the M1 first time windows.

In a possible design, the configuration information includes time window bitmap information, and the time window bitmap information is used to configure the M1 first time windows.

In a possible design, the configuration information is further used to configure a value of N1 or duration of one of the N1 first time windows.

In a possible design, the configuration information includes time window index information, and the time window index information is used to configure the M1 first time windows.

In a possible design, a first time window pattern corresponding to the M1 first time windows is one of a plurality of first time window patterns.

In a possible design, the interface unit 2020 is further configured to send DRX preference information to the network device, where the DRX preference information indicates a preference for power consumption and/or a preference for a delay.

When the communication apparatus 2000 is configured to implement the functions of the network device in the method embodiment shown in FIG. 12:

the processing unit 2010 is configured to generate configuration information, where the configuration information is used to configure M1 first time windows in N1 first time windows of a first time period, the M1 first time windows are used to monitor a physical downlink control channel PDCCH, the first time period is a discontinuous reception DRX on duration, N1 is an integer greater than or equal to 2, and M1 is a positive integer less than N1; and
the interface unit 2020 is configured to send the configuration information to a terminal device.

In a possible design, the configuration information includes time window bitmap information, and the time window bitmap information is used to configure the M1 first time windows.

In a possible design, the configuration information is further used to configure a value of N1 or duration of one of the N1 first time windows.

In a possible design, the configuration information includes time window index information, and the time window index information is used to configure the M1 first time windows.

In a possible design, a first time window pattern corresponding to the M1 first time windows is one of a plurality of first time window patterns.

In a possible design, the interface unit 2020 is further configured to receive DRX preference information from the terminal device, where the DRX preference information indicates a preference for power consumption and/or a preference for a delay.

In a possible design, the configuration information is further used to configure M2 second time windows in N2 second time windows of a second time period, the M2 second time windows are used to monitor the PDCCH, the first time period is a DRX on duration of a long DRX cycle, the second time period is a DRX on duration of a short DRX cycle, N2 is an integer greater than or equal to 2, and M2 is a positive integer less than N2.

When the communication apparatus 2000 is configured to implement the functions of the network device in the method embodiment shown in FIG. 16:

the processing unit 2010 is configured to generate configuration information, where the configuration information is used to configure M1 first time windows in N1 first time windows of a first time period, the M1 first time windows are used to monitor a physical downlink control channel PDCCH, duration of the first time period is a discontinuous reception DRX cycle, N1 is an integer greater than or equal to 3, and M1 is an integer less than N1 and greater than or equal to 2; and
the interface unit 2020 is configured to send the configuration information to a terminal device.

In a possible design, there are at least two first time windows that are inconsecutive in time in the M1 first time windows.

In a possible design, the configuration information includes time window bitmap information, and the time window bitmap information is used to configure the M1 first time windows.

In a possible design, the configuration information is further used to configure a value of N1 or duration of one of the N1 first time windows.

In a possible design, the configuration information includes time window index information, and the time window index information is used to configure the M1 first time windows.

In a possible design, a first time window pattern corresponding to the M1 first time windows is one of a plurality of first time window patterns.

In a possible design, the interface unit 2020 is further configured to receive DRX preference information from the terminal device, where the DRX preference information indicates a preference for power consumption and/or a preference for a delay.

As shown in FIG. 21, the communication apparatus 2100 includes a processor 2110 and an interface circuit 2120. The processor 2110 and the interface circuit 2120 are coupled to each other. It may be understood that the interface circuit 2120 may be a transceiver or an input/output interface. Optionally, the communication apparatus 2100 may further include a memory 2130, configured to: store instructions executed by the processor 2110, or store input data required by the processor 2110 to run the instructions, or store data generated after the processor 2110 runs the instructions.

When the communication apparatus 2100 is configured to implement the method shown in FIG. 12 or FIG. 16, the processor 2110 is configured to implement the function of the processing unit 2010, and the interface circuit 2120 is configured to implement the function of the interface unit 2020.

When the communication apparatus is a chip used in a terminal device, the chip in the terminal device implements the function of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The network device module herein may be a baseband chip of the network device, or may be a DU or another module. The DU herein may be a DU in an open radio access network (open radio access network, O-RAN) architecture.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In addition, it should be understood that the term "for example" in embodiments of this application is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In addition, in the embodiments of this application, information (information), a signal (signal), a message (message), and a channel (channel) may be interchangeably used sometimes. It should be noted that meanings expressed by the terms are consistent when differences are not emphasized. Terms "of (of)" and "corresponding (corresponding, relevant)" may be interchangeably used sometimes. It should be noted that meanings expressed by the terms are consistent when differences of the terms are not emphasized.

In this application, at least one means one or more, and a plurality of means two or more. "And/or" describes an association relationship between associated objects, and represents that three relationships may exist. For example, A and/or B may represent the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

**Claims**

1. A communication method, comprising:

   receiving configuration information from a network device; and
   monitoring a physical downlink control channel PDCCH in M1 first time windows in N1 first time windows of a first time period based on the configuration information, wherein the first time period is a discontinuous reception DRX on duration, N1 is an integer greater than or equal to 2, and M1 is a positive integer less than N1.

2. The method according to claim 1, wherein the configuration information comprises time window bitmap information, and the time window bitmap information is used to configure the M1 first time windows.

3. The method according to claim 2, wherein the configuration information is further used to configure a value of N1 or duration of one of the N1 first time windows.

4. The method according to claim 1, wherein the configuration information comprises time window index information, and the time window index information is used to configure the M1 first time windows.

5. The method according to claim 4, wherein a first time window pattern corresponding to the M1 first time windows is one of a plurality of first time window patterns.

6. The method according to any one of claims 1 to 5, wherein the method further comprises:
   sending DRX preference information to the network device, wherein the DRX preference information indicates a preference for power consumption and/or a preference for a delay.

7. The method according to any one of claims 1 to 6, wherein the method further comprises:
   monitoring the PDCCH in M2 second time windows in N2 second time windows of a second time period based on the configuration information, wherein the first time period is a DRX on duration of a long DRX cycle, the second time period is a DRX on duration of a short DRX cycle, N2 is an integer greater than or equal to 2, and M2 is a positive integer less than N2.

8. The method according to any one of claims 1 to 6, wherein the method further comprises:

obtaining M2 second time windows in N2 second time windows of a second time period based on the configuration information, wherein the first time period is a DRX on duration of a long DRX cycle, the second time period is a DRX on duration of a short DRX cycle, N2 is an integer greater than or equal to 2, and M2 is a positive integer less than N2; and
when the first time period and the second time period do not overlap in time, monitoring the PDCCH in the M2 second time windows; and
the monitoring a PDCCH in M1 first time windows in N1 first time windows of a first time period comprises:
when the first time period and the second time period overlap in time, monitoring the PDCCH in the M1 first time windows.

9. The method according to any one of claims 1 to 8, wherein the method further comprises:
after receiving PDCCH scheduling in any one of the M1 first time windows, starting a DRX activity timer, and monitoring the PDCCH in an activity period corresponding to the DRX activity timer.

10. A communication method, comprising:

receiving configuration information from a network device; and
monitoring a physical downlink control channel PDCCH in M1 first time windows in N1 first time windows of a first time period based on the configuration information, wherein duration of the first time period is a discontinuous reception DRX cycle, N1 is an integer greater than or equal to 3, and M1 is an integer less than N1 and greater than or equal to 2.

11. The method according to claim 10, wherein there are at least two first time windows that are inconsecutive in time in the M1 first time windows.

12. The method according to claim 10 or 11, wherein the configuration information comprises time window bitmap information, and the time window bitmap information is used to configure the M1 first time windows.

13. The method according to claim 12, wherein the configuration information is further used to configure a value of N1 or duration of one of the N1 first time windows.

14. The method according to claim 10, wherein the configuration information comprises time window index information, and the time window index information is used to configure the M1 first time windows.

15. The method according to claim 14, wherein a first time window pattern corresponding to the M1 first time windows is one of a plurality of first time window patterns.

16. The method according to any one of claims 10 to 15, wherein the method further comprises:
sending DRX preference information to the network device, wherein the DRX preference information indicates a preference for power consumption and/or a preference for a delay.

17. The method according to any one of claims 10 to 16, wherein the method further comprises:
after receiving PDCCH scheduling in any one of the M1 first time windows, starting a DRX activity timer, and monitoring the PDCCH in an activity period corresponding to the DRX activity timer.

18. A communication method, comprising:

generating configuration information, wherein the configuration information is used to configure M1 first time windows in N1 first time windows of a first time period, the M1 first time windows are used to monitor a physical downlink control channel PDCCH, the first time period is a discontinuous reception DRX on duration, N1 is an integer greater than or equal to 2, and M1 is a positive integer less than N1; and
sending the configuration information to a terminal device.

**19.** The method according to claim 18, wherein the configuration information comprises time window bitmap information, and the time window bitmap information is used to configure the M1 first time windows.

**20.** The method according to claim 19, wherein the configuration information is further used to configure a value of N1 or duration of one of the N1 first time windows.

**21.** The method according to claim 18, wherein the configuration information comprises time window index information, and the time window index information is used to configure the M1 first time windows.

**22.** The method according to claim 21, wherein a first time window pattern corresponding to the M1 first time windows is one of a plurality of first time window patterns.

**23.** The method according to any one of claims 18 to 22, wherein the method further comprises:
receiving DRX preference information from the terminal device, wherein the DRX preference information indicates a preference for power consumption and/or a preference for a delay.

**24.** The method according to any one of claims 18 to 23, wherein the configuration information is further used to configure M2 second time windows in N2 second time windows of a second time period, the M2 second time windows are used to monitor the PDCCH, the first time period is a DRX on duration of a long DRX cycle, the second time period is a DRX on duration of a short DRX cycle, N2 is an integer greater than or equal to 2, and M2 is a positive integer less than N2.

**25.** A communication method, comprising:

generating configuration information, wherein the configuration information is used to configure M1 first time windows in N1 first time windows of a first time period, the M1 first time windows are used to monitor a physical downlink control channel PDCCH, duration of the first time period is a discontinuous reception DRX cycle, N1 is an integer greater than or equal to 3, and M1 is an integer less than N1 and greater than or equal to 2; and
sending the configuration information to a terminal device.

**26.** The method according to claim 25, wherein there are at least two first time windows that are inconsecutive in time in the M1 first time windows.

**27.** The method according to claim 25 or 26, wherein the configuration information comprises time window bitmap information, and the time window bitmap information is used to configure the M1 first time windows.

**28.** The method according to claim 27, wherein the configuration information is further used to configure a value of N1 or duration of one of the N1 first time windows.

**29.** The method according to claim 25, wherein the configuration information comprises time window index information, and the time window index information is used to configure the M1 first time windows.

**30.** The method according to claim 29, wherein a first time window pattern corresponding to the M1 first time windows is one of a plurality of first time window patterns.

**31.** The method according to any one of claims 25 to 30, wherein the method further comprises:
receiving DRX preference information from the terminal device, wherein the DRX preference information indicates a preference for power consumption and/or a preference for a delay.

**32.** A communication apparatus, comprising an interface unit and a processing unit, wherein the interface unit is configured to receive configuration information from a network device; and
the processing unit is configured to control, based on the configuration information, the apparatus to monitor a physical downlink control channel PDCCH in M1 first time windows in N1 first time windows of a first time period, wherein the first time period is a discontinuous reception DRX on duration, N1 is an integer greater than or equal to 2, and M1 is a positive integer less than N1.

**33.** The apparatus according to claim 32, wherein the configuration information comprises time window bitmap information, and the time window bitmap information is used to configure the M1 first time windows.

**34.** The apparatus according to claim 33, wherein the configuration information is further used to configure a value of N1 or duration of one of the N1 first time windows.

**35.** The apparatus according to claim 32, wherein the configuration information comprises time window index information, and the time window index information is used to configure the M1 first time windows.

**36.** The apparatus according to claim 35, wherein a first time window pattern corresponding to the M1 first time windows is one of a plurality of first time window patterns.

**37.** The apparatus according to any one of claims 32 to 36, wherein the interface unit is further configured to send DRX preference information to the network device, and the DRX preference information indicates a preference for power consumption and/or a preference for a delay.

**38.** The apparatus according to any one of claims 32 to 37, wherein the processing unit is further configured to control, based on the configuration information, the apparatus to monitor the PDCCH in M2 second time windows in N2 second time windows of a second time period, wherein the first time period is a DRX on duration of a long DRX cycle, the second time period is a DRX on duration of a short DRX cycle, N2 is an integer greater than or equal to 2, and M2 is a positive integer less than N2.

**39.** The apparatus according to any one of claims 32 to 37, wherein the processing unit is further configured to obtain M2 second time windows in N2 second time windows of a second time period based on the configuration information, wherein the first time period is a DRX on duration of a long DRX cycle, the second time period is a DRX on duration of a short DRX cycle, N2 is an integer greater than or equal to 2, and M2 is a positive integer less than N2; and

the processing unit is further configured to: when the first time period and the second time period do not overlap in time, control the apparatus to monitor the PDCCH in the M2 second time windows; and
that the processing unit controls the apparatus to monitor the PDCCH in the M1 first time windows in the N1 first time windows of the first time period comprises:
when the first time period and the second time period overlap in time, controlling the apparatus to monitor the PDCCH in the M1 first time windows.

**40.** The apparatus according to any one of claims 32 to 39, wherein the processing unit is further configured to: after receiving PDCCH scheduling in any one of the M1 first time windows, start a DRX activity timer, and monitor the PDCCH in an activity period corresponding to the DRX activity timer.

**41.** A communication apparatus, comprising an interface unit and a processing unit, wherein the interface unit is configured to receive configuration information from a network device; and
the processing unit is configured to control, based on the configuration information, the communication apparatus to monitor a physical downlink control channel PDCCH in M1 first time windows in N1 first time windows of a first time period, wherein duration of the first time period is a discontinuous reception DRX cycle, N1 is an integer greater than or equal to 3, and M1 is an integer less than N1 and greater than or equal to 2.

**42.** The apparatus according to claim 41, wherein there are at least two first time windows that are inconsecutive in time in the M1 first time windows.

**43.** The apparatus according to claim 41 or 42, wherein the configuration information comprises time window bitmap information, and the time window bitmap information is used to configure the M1 first time windows.

**44.** The apparatus according to claim 43, wherein the configuration information is further used to configure a value of N1 or duration of one of the N1 first time windows.

**45.** The apparatus according to claim 41, wherein the configuration information comprises time window index information, and the time window index information is used to configure the M1 first time windows.

**46.** The apparatus according to claim 45, wherein a first time window pattern corresponding to the M1 first time windows is one of a plurality of first time window patterns.

**47.** The apparatus according to any one of claims 41 to 46, wherein the interface unit is further configured to send DRX preference information to the network device, and the DRX preference information indicates a preference for power consumption and/or a preference for a delay.

48. The apparatus according to any one of claims 41 to 47, wherein the processing unit is further configured to: after receiving PDCCH scheduling in any one of the M1 first time windows, start a DRX activity timer, and monitor the PDCCH in an activity period corresponding to the DRX activity timer.

49. A communication apparatus, comprising an interface unit and a processing unit, wherein

the processing unit is configured to generate configuration information, wherein the configuration information is used to configure M1 first time windows in N1 first time windows of a first time period, the M1 first time windows are used to monitor a physical downlink control channel PDCCH, the first time period is a discontinuous reception DRX on duration, N1 is an integer greater than or equal to 2, and M1 is a positive integer less than N1; and the interface unit is configured to send the configuration information to a terminal device.

50. The apparatus according to claim 49, wherein the configuration information comprises time window bitmap information, and the time window bitmap information is used to configure the M1 first time windows.

51. The apparatus according to claim 50, wherein the configuration information is further used to configure a value of N1 or duration of one of the N1 first time windows.

52. The apparatus according to claim 49, wherein the configuration information comprises time window index information, and the time window index information is used to configure the M1 first time windows.

53. The apparatus according to claim 52, wherein a first time window pattern corresponding to the M1 first time windows is one of a plurality of first time window patterns.

54. The apparatus according to any one of claims 49 to 53, wherein the interface unit is further configured to receive DRX preference information from the terminal device, and the DRX preference information indicates a preference for power consumption and/or a preference for a delay.

55. The apparatus according to any one of claims 49 to 54, wherein the configuration information is further used to configure M2 second time windows in N2 second time windows of a second time period, the M2 second time windows are used to monitor the PDCCH, the first time period is a DRX on duration of a long DRX cycle, the second time period is a DRX on duration of a short DRX cycle, N2 is an integer greater than or equal to 2, and M2 is a positive integer less than N2.

56. A communication apparatus, comprising an interface unit and a processing unit, wherein

the processing unit is configured to generate configuration information, wherein the configuration information is used to configure M1 first time windows in N1 first time windows of a first time period, the M1 first time windows are used to monitor a physical downlink control channel PDCCH, duration of the first time period is a discontinuous reception DRX cycle, N1 is an integer greater than or equal to 3, and M1 is an integer less than N1 and greater than or equal to 2; and the interface unit is configured to send the configuration information to a terminal device.

57. The apparatus according to claim 56, wherein there are at least two first time windows that are inconsecutive in time in the M1 first time windows.

58. The apparatus according to claim 56 or 57, wherein the configuration information comprises time window bitmap information, and the time window bitmap information is used to configure the M1 first time windows.

59. The apparatus according to claim 58, wherein the configuration information is further used to configure a value of N1 or duration of one of the N1 first time windows.

60. The apparatus according to claim 56, wherein the configuration information comprises time window index information, and the time window index information is used to configure the M1 first time windows.

61. The apparatus according to claim 60, wherein a first time window pattern corresponding to the M1 first time windows is one of a plurality of first time window patterns.

62. The apparatus according to any one of claims 56 to 61, wherein the interface unit is further configured to receive DRX preference information from the terminal device, and the DRX preference information indicates a preference for power consumption and/or a preference for a delay.

63. A communication apparatus, comprising a processor, wherein the processor is configured to perform the method according to any one of claims 1 to 31.

64. A communication apparatus, comprising a processor, wherein the processor is configured to execute instructions stored in a memory, so that the method according to any one of claims 1 to 31 is implemented.

65. A computer program product, comprising program code, wherein when the program code is executed, the method according to any one of claims 1 to 31 is implemented.

66. A computer-readable storage medium, wherein the storage medium stores a computer program or instructions, and when the computer program or the instructions are executed, the method according to any one of claims 1 to 31 is implemented.

Time (ms)

DRX on duration | Monitor a PDCCH

DRX on duration | Monitor a PDCCH

Have an opportunity to enter a sleep state

Have an opportunity to enter a sleep state

DRX cycle

DRX cycle

FIG. 1

100

120i

110a

120c

200

Core network

120j

110b

120a

120d

120f

120g

120h

120b

120e

300

Internet

FIG. 2

FIG. 3

FIG. 4

FIG. 5

FIG. 6

Terminal device

Network device

S701: Configuration information

S702: Monitor a PDCCH in M1 first time windows in N1 first time windows of a first time period based on the configuration information

FIG. 7

Time (ms)

Monitor a PDCCH

DRX on duration
(8 ms)

Have an opportunity
to enter a sleep state

DRX cycle (16 ms)

FIG. 8

First time window not
used to monitor a
PDCCH

First time window used
to monitor a PDCCH

First time period
(DRX on duration)

First time period
(DRX on duration)

5          10          15          20

Time (ms)

DRX cycle

FIG. 9

Relative power consumption
value (relative power
consumption value relative to
power consumption in the deep
sleep state per unit time)

Ramp
down

Ramp
up

Deep sleep state/Light sleep state

Time (ms)

FIG. 10

FIG. 11

FIG. 12

FIG. 13

FIG. 14

FIG. 15

# EP 4 401 460 A1

| Terminal device | | Network device |

S1601: Configuration information

S1602: Monitor a PDCCH in M1 first time windows in N1 first time windows of a first time period based on the configuration information, where duration of the first time period is a DRX cycle

FIG. 16

☐ First time window not used to monitor a PDCCH

▨ First time window used to monitor a PDCCH

5    10    15    20

Time (ms)

First time period (DRX cycle)

FIG. 17

PDCCH scheduling    Activity period

(DRX on duration)

DRX cycle    DRX cycle

Time (ms)

FIG. 18

39

PDCCH
scheduling    Activity period

(DRX on duration)

Time (ms)

DRX cycle

After receiving a DRX
command MAC CE, stopping
a DRX on duration and a DRX
activity timer

FIG. 19

Communication apparatus
2000

Processing unit 2010

Interface unit 2020

FIG. 20

Communication apparatus 2100

Processor 2110

Interface circuit
2120

Memory 2130

FIG. 21

## INTERNATIONAL SEARCH REPORT

| International application No. |
| --- |
| **PCT/CN2022/121099** |

**A. CLASSIFICATION OF SUBJECT MATTER**

H04W 24/08(2009.01)i

According to International Patent Classification (IPC) or to both national classification and IPC

**B. FIELDS SEARCHED**

Minimum documentation searched (classification system followed by classification symbols)

H04W, H04L, H04Q

Documentation searched other than minimum documentation to the extent that such documents are included in the fields searched

Electronic data base consulted during the international search (name of data base and, where practicable, search terms used)

CNABS, CNTXT, ENTXTC, WPABS, 3GPP: 物理下行链路控制信道, PDCCH, 监视, 监听, 配置, 时间窗, 非连续接收, DRX, 时段, 时长, 周期, physical downlink control channel, monitor+, configurat+, time window, discontinuous reception, duration, period

**C. DOCUMENTS CONSIDERED TO BE RELEVANT**

| Category* | Citation of document, with indication, where appropriate, of the relevant passages | Relevant to claim No. |
| --- | --- | --- |
| X | WO 2020204488 A1 (LG ELECTRONICS INC.) 08 October 2020 (2020-10-08) description, paragraphs [0199]-[0342], and figures 15-25 | 1, 10, 18, 25, 32, 41, 49, 56 |
| A | WO 2021062792 A1 (HUAWEI TECHNOLOGIES CO., LTD.) 08 April 2021 (2021-04-08) entire document | 1-66 |
| A | CN 109923914 A (LG ELECTRONICS INC.) 21 June 2019 (2019-06-21) entire document | 1-66 |
| A | US 2021153127 A1 (QUALCOMM INC.) 20 May 2021 (2021-05-20) entire document | 1-66 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **21 October 2022** | **01 November 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/121099**

| Patent document cited in search report | | | Publication date (day/month/year) | Patent family member(s) | | | Publication date (day/month/year) |
|---|---|---|---|---|---|---|---|
| WO | 2020204488 | A1 | 08 October 2020 | EP | 3927025 | A1 | 22 December 2021 |
| | | | | KR | 20210121252 | A | 07 October 2021 |
| | | | | CN | 113661740 | A | 16 November 2021 |
| | | | | US | 2022007292 | A1 | 06 January 2022 |
| WO | 2021062792 | A1 | 08 April 2021 | US | 2022225470 | A1 | 14 July 2022 |
| | | | | EP | 4030831 | A1 | 20 July 2022 |
| CN | 109923914 | A | 21 June 2019 | EP | 3968709 | A1 | 16 March 2022 |
| | | | | US | 2021153163 | A1 | 20 May 2021 |
| | | | | JP | 2020501431 | A | 16 January 2020 |
| | | | | EP | 3509368 | A1 | 10 July 2019 |
| | | | | CN | 113891437 | A | 04 January 2022 |
| | | | | CN | 113873621 | A | 31 December 2021 |
| | | | | US | 2019239189 | A1 | 01 August 2019 |
| US | 2021153127 | A1 | 20 May 2021 | WO | 2021102456 | A1 | 27 May 2021 |
| | | | | CN | 114731584 | A | 08 July 2022 |
| | | | | EP | 4062679 | A1 | 28 September 2022 |
| | | | | BR | 112022008979 | A2 | 02 August 2022 |
| | | | | TW | 202121915 | A | 01 June 2021 |
| | | | | KR | 20220102611 | A | 20 July 2022 |

Form PCT/ISA/210 (patent family annex) (January 2015)

**REFERENCES CITED IN THE DESCRIPTION**

**Patent documents cited in the description**

- CN 202111194278